# EUROPÄISCHE PATENTSCHRIFT

(11) **EP 3 509 840 B1**
(45) Veröffentlichungstag und Bekanntmachung des Hinweises auf die Patenterteilung: **04.11.2020**
(21) Anmeldenummer: 17764571.0
(22) Anmeldetag: 07.09.2017
(51) Int. Cl.: B32B 37/18, B42D 25/45, B42D 25/455, B42D 25/46

(54) **VORRICHTUNG ZUM LAMINIEREN EINES MATERIALBOGENHEFTS**
DEVICE FOR LAMINATING AN ASSEMBLY OF SHEETS
DISPOITIF POUR LAMINER EN ENSEMBLE DE FEUILLES

(30) Priorität: 07.09.2016 DE 102016217045
(43) Veröffentlichungstag der Anmeldung: 17.07.2019
(73) Patentinhaber: Bundesdruckerei GmbH, 10969 Berlin (DE)
(72) Erfinder: BAUDACH, Steffen, 13189 Berlin (DE); VON CZAPIEWSKI, Christoph, 14050 Berlin (DE); GÖDECKE, Alexander, 93170 Bernhardswald - Pettenreuth (DE); HERES, Roland, 31535 Neustadt (DE); STRAUB, Alexander, 83115 Neubeuern (DE)
(74) Vertreter: Richardt Patentanwälte PartG mbB
(86) Internationale Anmeldenummer: PCT/EP2017/072524
(87) Internationale Veröffentlichungsnummer: WO 2018/046628

(56) Entgegenhaltungen:
- EP-A1- 1 375 122
- DE-A1-102005 045 567
- DE-A1-102008 008 044
- JP-A- 2000 182 014

## Beschreibung

Die Erfindung betrifft eine Vorrichtung zum Laminieren eines Materialbogenhefts sowie ein Verfahren zum Laminieren des entsprechenden Materialbogenhefts.

Aus dem Stand der Technik sind Laminiervorrichtungen zum Laminieren von Ausweis-, Wert- oder Sicherheitsdokumenten bekannt. Die vorbekannten Vorrichtungen sind im Allgemeinen für das Erzeugen eines bestimmten Dokumenttyps optimiert und für das Laminieren einer großen Anzahl von Materialbogenstößen identischer Dokumenttypen ausgelegt.

Die EP 1 375 122 A1 beschreibt eine Platte zum Heißpressen, die in der Lage ist, den Vakuumgrad ihres Inneren in Form einer Trennung von einer Entlüftungsvorrichtung aufrecht zu erhalten, eine Heißpressvorrichtung mit Pressenabschnitten und eine Kartenherstellungsvorrichtung, welche zur selbständigen Herstellung verschiedener Arten von Karten in der Lage ist. Die Platte zum Heißpressen ist mit einer Rückschlagventilvorrichtung versehen, um einen Vakuumzustand innerhalb eines Basismaterialaufnahmeabschnitts zu halten, der zwischen einem Paar von Plattenelementen und jeweiligen Pressenabschnitten gebildet ist, die Laminierungsabschnitte bildet und jeweils in Reihe angeordnet sind. Förderschienen zum Befördern der Platte zum Heißpressen sind doppelt auf einer Oberseite und einer Unterseite angeordnet, und Fördermittel, welche die Platte zum Heißpressen befördern, sind zyklisch vorgesehen.

Der Erfindung liegt die Aufgabe zugrunde, eine Laminiervorrichtung zum Laminieren eines Materialbogenhefts sowie ein entsprechendes Verfahren zur Verfügung zu stellen, welche ein effizientes und flexibles Laminieren von Materialbögen für unterschiedliche Dokumenttypen ermöglichen.

Die der Erfindung zugrundeliegenden Aufgaben werden durch die Merkmale der unabhängigen Patentansprüche gelöst. Bevorzugte Ausführungsformen der Erfindung sind in den abhängigen Patentansprüchen angegeben.

Ausführungsformen betreffen eine Laminiervorrichtung zum Laminieren eines Materialbogenhefts für einen aus einer Mehrzahl unterschiedlicher Ausweis-, Wert- oder Sicherheitsdokumenttypen ausgewählten Dokumenttyp, wobei das Materialbogenheft eine dokumenttypspezifische Auswahl von Materialbögen in einer dokumenttypspezifischen Reihenfolge umfasst.

Die Laminiervorrichtung umfasst: eine Laminationsblechvorratsstation, welche Laminationsbleche unterschiedlicher Laminationsblechpaare für die unterschiedlichen Dokumenttypen vorrätig hält.

Einen Laminationsblechwechsler, welcher dazu konfiguriert ist, ein erstes und ein zweites Laminationsblech der Laminationsblechpaare gemäß dem Dokumenttyp des Materialbogenhefts aus der Laminationsblechvorratsstation zu entnehmen und in einer Aufnahme einer Laminationsblechtransportvorrichtung anzuordnen.

Laminierstationen, welche in einer Reihe nebeneinander angeordnet sind, wobei die Laminationsblechtransportvorrichtung dazu konfiguriert ist, die beiden Laminationsbleche in der Aufnahme nacheinander zu den einzelnen Laminierstationen zu transportieren, welche jeweils dazu konfiguriert sind, die beiden Laminationsbleche zum Laminieren des Materialbogenhefts mit Druck und Hitze in vordefinierter Weise zu beaufschlagen.

Eine Austeilvorrichtung, welche dazu konfiguriert ist, das zu laminierende Materialbogenheft zwischen das erste und zweite Laminationsblech in der Aufnahme einzubringen.

Eine Entnahmevorrichtung, welche dazu konfiguriert ist, das laminierte Materialbogenheft zwischen den beiden Laminationsblechen zu entnehmen.

Ausführungsformen können den Vorteil haben, dass sie eine vollautomatisierte Vorrichtung zum Erzeugen eines laminierten Materialbogenhefts bereitstellen. Ein solches laminiertes Materialbogenheft stellt einen Verbundkörper dar, aus welchem ein Dokumentenkörper eines Ausweis-, Wert- oder Sicherheitsdokument gefertigt werden kann. Bei einem entsprechenden Dokumentenkörper kann es sich beispielsweise um ein kartenförmiges Ausweis-, Wert- oder Sicherheitsdokument als solches oder beispielsweise um eine Datenkarte für ein buchförmiges Ausweis-, Wert- oder Sicherheitsdokument handeln.

Das dokumenttypspezifische Materialbogenheft umfasst die Materialbögen, aus denen ein Dokumentenkörper des ausgewählten Dokumenttyps besteht. Insbesondere umfasst das Materialbogenheft die Materialbögen in einer dokumenttypspezifischen Reihenfolge. Als Materialien der Materialbögen können beispielsweise Papier, Pappe oder Kunststoffe wie Metallfolien Verwendung finden. Ein Materialbogen kann auch Kombinationen dieser Materialen umfassen.

Bei dem Dokumentenkörper kann es sich beispielsweise um einen Kartenkörper handeln, wenn es sich bei dem Ausweis-, Wert- oder Sicherheitsdokument um ein kartenförmiges Dokument handelt. Bei dem Dokumentenkörper kann es sich ferner auch um einen Körper handeln, der Teil eines Ausweis-, Wert- oder Sicherheitsdokument ist. So kann es sich beispielsweise um eine Datenkarte handeln, welche Teil eines buchenförmigen Ausweis-, Wert- oder Sicherheitsdokuments, beispielsweise eines Reisepasses, ist. Auf eine solche Datenkarte sind beispielsweise personen- und/oder dokumentspezifische Informationen wie ein Passbild, Name, Adresse des Nutzers oder eine Hausnummer aufgebracht, insbesondere auch in maschinenlesbarer Form.

Die Materialbögen können insbesondere elektronische Komponenten, etwa einen Chip, eine Antenne, ein Display, eine Eingabevorrichtung und/oder Sensoren, umfassen oder in Kombination miteinander bilden. Das Materialbogenheft kann insbesondere einen Materialbogen mit einem Chip umfassen, welcher zur Speicherung personen- und/oder dokumenttypspezifischer Informationen konfiguriert ist. Der Chip kann einen gesicherten Speicherbereich aufweisen, in welchem personen- und/oder dokumenttypspezifische Daten gespeichert werden.

Unter einem "Ausweis-, Wert- oder Sicherheitsdokument" wird im Folgenden ein papier- und/oder kunststoffbasiertes Dokument verstanden, auf bzw. in welchem personenspezifische und/oder dokumenttypspezifische Informationen optisch und/oder elektronisch lesbar eingebracht sind, die eine Identifizierung des Nutzers oder des Dokuments, beispielsweise für die Freigabe bestimmter Dienste oder Funktionen ermöglichen. Darunter fallen zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten, Kreditkarten, Frachtbriefe oder sonstige Berechtigungsnachweise. Wertdokumente können insbesondere auch Geldscheine oder Wertgutscheine sein. Ebenso kann es sich bei einem Dokument beispielsweise um eine Zugangskarte handeln.

Das Materialbogenheft kann insbesondere zur Herstellung einer Datenkarte vorgesehen sein, d.h. einer papier- oder kunststoffbasierten Karte, welche in einem Buchblock eines Ausweis-, Wert- oder Sicherheitsdokuments angeordnet ist und auf der personenspezifische und/oder dokumentenspezifische Informationen optisch lesbar aufgebracht sind, die eine Identifizierung des Nutzers oder des Dokuments, beispielsweise für die Freigabe bestimmter Dienste oder Funktionen ermöglicht.

Nach Ausführungsformen sind die einzelnen Materialbögen des Materialbogenhefts in ihrer relativen Ausrichtung zueinander fixiert. Eine entsprechende Fixierung kann beispielsweise mittels einer Ultraschallverschweißung aufeinanderfolgender Bögen geschehen. Die Materialbögen können an einer oder vorzugsweise mehreren Stellen, beispielsweise im Falle eines rechteckigen Bogenformats jeweils in den Eckbereichen, ultraschallverschweißt sein. Nach Ausführungsformen weisen die Laminationsbleche jeweils einen Laminationsbereich bzw. eine Laminationsfläche auf, welche dazu vorgesehen ist, bei einem Laminationsvorgang mit einer Oberfläche des zu laminierenden Materialbogenhefts in Kontakt zu treten, d.h. mit der des obersten oder untersten Materialbogen des entsprechenden Hefts. Die räumlichen Bezüge oben und unten orientieren sich in diesem Fall an der Ebene, in welcher sich das Materialbogenheft erstreckt. Nach Ausführungsformen weist der Laminationsbereich eine dokumenttypspezifische Oberflächenstruktur auf, welche beim Laminationsvorgang in eine Oberfläche des Materialbogenhefts eingebracht wird. Nach Ausführungsformen ist die Größe der Fläche des Laminationsbereichs dokumenttypabhängig. Nach Ausführungsformen ist die Fläche des Laminationsbereichs kleiner als die Fläche des Materialbogenhefts. Tritt das Laminationsblech mit seinem Laminationsbereich in Kontakt mit dem Materialbogenheft, so wird das Materialbogenheft nicht vollständig laminiert. Ein Randbereich des Materialbogenhefts ragt über den Laminationsbereich hinaus und wird nicht mitlaminiert. Ausführungsformen können den Vorteil haben, dass dadurch ein Kontakt zwischen dem ersten und zweiten Laminationsblech verhindert und somit deren Abnutzung reduziert wird. Dadurch wird das Risiko einer Beschädigung der Laminationsbleche, insbesondere der aufzuprägenden Oberflächenstrukturen, vermindert. Die entsprechenden Laminationsbleche können damit häufiger verwendet werden. Zudem kann der Ausschuss von Materialbogenheften mit fehlerhafter Laminierung reduziert werden. Der vollständig laminierte Bereich des Materialbogenhefts wird als Nutzen bezeichnet, aus welchem in weiteren Produktionsschritten zur Herstellung eines Ausweis-, Wert- oder Sicherheitsdokuments ein Dokumentenkörper gefertigt wird.

Laminationsfähige Materialbögen bestehen vorzugsweise aus thermoplastischem Kunststoff. Falls einzelne Materialbögen nicht aus laminationsfähigem Material bestehen, sind im Materialbogenheft zwischen diesen nicht laminationsfähigen Materialbögen andere Materialbögen angeordnet, welche aus einem laminationsfähigen Material bestehen oder ein solches zumindest umfassen und die die nicht laminationsfähigen Materialbögen mit dem restlichen Materialbogenheft beim Laminationsvorgang verbinden. Beispielhafte Materialen, aus denen die Materialbögen bestehen, sind Polycarbonat (PC), Polyvinylchlorid (PVC), Polyester, beispielsweise Polyethylenterephthalat (PET), Polyolefine, beispielsweise Polyethylen (PE) und Polypropylen (PP), Acrylnitril-Butadien-Styrol-Copolymer (ABS), Polyurethan (PU), Polyetheretherketon (PEEK) sowie weitere thermoplastisch verarbeitbare Materialien, ferner Materialverbände, kunststoffkaschierte, papierartige Materialien, wie Teslin, und andere. Besonders bevorzugt ist PC. Einzelne der oben genannten Materialien können in den Materialbögen auch kombiniert sein.

Beim Laminationsvorgang werden die Materialbögen mit Druck und Hitze beaufschlagt, wodurch die Materialbögen bei Überschreitung der Glasübergangstemperatur an ihren Grenzflächen erweicht und sich miteinander verbinden, sodass eine stoffschlüssige Verbindung der Materialbögen untereinander erzielt wird. Die Höhe des Laminierdruckes und insbesondere der Laminiertemperatur sind von der Materialart der einzelnen Lagen, deren Dicken sowie von anderen Parametern abhängig. Die Maximaltemperatur, auf die die Laminierpressen erwärmt werden, wird abhängig von der Art des Materials, aus dem die Folienlagen bestehen, gewählt. Im Falle von PC und PC-Blends (Mischungen von PC mit anderen Kunststoffen) kann die Maximaltemperatur beispielsweise im Bereich von 170-200 °C, vorzugsweise 180-190 °C, liegen. Während des Laminationsvorgangs wird das Materialbogenheft zwischen den Laminierpressen vorzugsweise mit einem Druck senkrecht zu den Oberflächen des Materialbogenhefts beaufschlagt. Dieser Druck soll möglichst so groß sein, dass Luft, die sich eventuell zwischen den Folienlagen befindet, beim Erweichen der Lagen herausgepresst wird. Der Druck kann beispielweise in einem Bereich von 25 bis 700 N/cm², vorzugsweise in einem Bereich von 50 bis 100 N/cm², liegen.

Nach Ausführungsformen ist die Laminiervorrichtung dazu konfiguriert, das erste und das zweite Laminationsblech jeweils mit Temperaturen gemäß unterschiedlicher zeitlicher Temperaturkurven zu beaufschlagen. Die Temperaturkurve kann sich an einer oder mehreren der Laminierstationen für das erste und das zweite Laminationsblech unterscheiden. Ausführungsformen haben den Vorteil, dass sich die Temperaturerhöhung von der Ober- und der Unterseite des Materialbogenhefts unterschiedlich schnell in Richtung der Mittelebene des Materialbogenhefts ausbreitet. So können bestimmte Bereiche des Materialbogenhefts, d.h. bestimmte Materialbogen, schneller auf ihre Glasübergangstemperatur gebracht werden als andere. Für erstere setzt der entsprechende Schmelzvorgang mithin früher ein, wodurch diese gezielt Hohlräume, die durch Oberflächenstrukturen benachbarten Materialbögen innerhalb des Materialbogenhefts erzeugt werden, mit ihrem Material auffüllen können.

Nach Ausführungsformen befinden sich die ultraschallverschweißten Bereiche des Materialbogenhefts im Randbereich außerhalb des Nutzens, d.h. des Bereichs, in dem die Laminationsbleche mit dem Materialbogenheft in Kontakt treten. Ausführungsformen können den Vorteil haben, dass eine nachteilige Beeinflussung des Laminationsvorgangs durch die Ultraschallverschweißung vermieden werden kann.

Ausführungsformen können den Vorteil haben, dass sie es erlauben, durch Wahl geeigneter Laminationsbleche aus einem Vorrat von Laminationsblechpaaren für unterschiedliche Dokumenttypen Materialbogenhefte für unterschiedliche Dokumenttypen zu laminieren. Zudem kann der Laminationsvorgang durch die Mehrzahl an Laminierstationen, welche die Materialbogenhefte der Reihe nach durchlaufen, in Intervalle unterteilt werden. Diese Intervalle können gleiche oder unterschiedliche Länge aufweisen. Beispielsweise kann der Laminationsvorgang bei N Laminierstationen in N gleichlange Intervalle unterteilt werden. Die Anzahl N beträgt dann beispielsweise zwei, drei oder vier Laminierstationen. Im Falle einer Gesamtlaminationszeit von 45 Sekunden und drei Laminierstationen, kann der Laminationsvorgang beispielsweise in drei Teilintervalle von jeweils 15 Sekunden unterteilt werden, d.h. das zu laminierende Materialbogenheft wird an jeder der drei hintereinander angeordneten Laminierstationen jeweils 15 Sekunden lang laminiert. Die Druck- und Temperaturverteilung des Laminationsvorgangs kann über die drei Laminationsintervalle konstant oder unterschiedlich gewählt werden. Ausführungsformen können den Vorteil haben, dass somit im Falle von N hintereinander angeordneten Laminierstationen N Materialbogenhefte gleichzeitig laminiert werden können und nicht erst abwarten müssen, bis der Laminationsprozess eines vorausgehenden Materialbogenhefts vollständig abgeschlossen ist.

Nach Ausführungsformen können die Materialbogenhefte neben Materialbögen aus laminationsfähigen Materialien auch einzelne Materialbögen zumindest teilweise aus nicht laminationsfähigen Materialien umfassen, beispielsweise elektronische Komponenten wie etwa einen Chip, einen Holofilm zum Erzeugen eines Hologramms, Papierabschnitte für eine nachträgliche Beschriftung per Hand oder eine abziehbare Schutzfolie. Eine entsprechende Schutzfolie kann dem Schutz des resultierenden Verbundkörpers dienen. Eine Schutzfolie kann strukturiert sein und/oder die Oberfläche des resultierenden Verbundkörpers nur teilweise überdecken, sodass durch ein späteres Abziehen der Schutzfolie eine Oberflächenstruktur auf dem Verbundkörper erzeugt werden kann.

Nach Ausführungsformen ist der Laminationsblechwechsler dazu konfiguriert, im Falle, dass nachfolgend ein weiteres Materialbogenheft eines anderen Dokumenttyps zu laminieren ist, das erste und zweite Laminationsblech zu entnehmen, die beiden Laminationsbleche in die Laminationsblechvorratsstation einzubringen, eines der Laminationsblechpaare für den anderen Dokumenttyp aus der Laminationsblechvorratsstation zu entnehmen und in der Aufnahme der Laminationsblechtransportvorrichtung anzuordnen.

Ausführungsformen können den Vorteil haben, dass die durch den Laminationsblechwechsler eingebrachten Laminationsbleche wieder ausgewechselt werden können. Dies ist vorteilhaft für eine schnelle Umstellung der Laminationsvorgangs von einem Dokumenttyp auf einen anderen. Nach Ausführungsformen umfasst die Laminiervorrichtung eine zentrale Steuervorrichtung. Die Steuervorrichtung umfasst beispielsweise einen Mikroprozessor und einen Speicher mit Programminstruktionen, wobei die Steuervorrichtung durch eine Ausführung der Programminstruktionen mittels des Mikroprozessors die Laminiervorrichtung steuert. Die Laminiervorrichtung empfängt beispielsweise ein Identifikationssignal, welches den Dokumenttyp eines zu laminierenden Materialbogenhefts identifiziert. Ein entsprechendes Identifikationssignal könnte zusätzlich zu einem Materialbogenheft empfangen werden. Ein entsprechendes Identifikationssignal könnte über eine Erfassungseinheit zur Erfassung eines Dokumenttyps eines bereitgestellten Materialbogenhefts erfasst und an die zentrale Steuervorrichtung gesendet werden. Eine entsprechende Erfassungsvorrichtung kann beispielsweise in Form einer Vorrichtung zur visuellen Erfassung wie beispielsweise einer Kamera bereitgestellt sein.

Nach Ausführungsformen umfasst die Laminationsblechtransportvorrichtung eine Mehrzahl der Aufnahmen, welche in einer Reihe nebeneinander angeordnet und jeweils dazu konfiguriert sind, eines der Laminationsblechpaare aufzunehmen.

Ausführungsformen können den Vorteil haben, dass sie einen gleichzeitigen Transport der Laminationsblechpaare sukzessive zu den einzelnen Laminierstationen ermöglichen. Entsprechende Aufnahmen können beispielsweise durch Halteelemente bereitgestellt werden, welche die Laminationsbleche auf zwei gegenüberliegenden Seiten halten oder in Form von rahmenförmigen Aufnahmen, in welche die Laminationsbleche eingesetzt und entlang ihres Rands zumindest abschnittweise gehalten werden.

Nach Ausführungsformen weist der Laminationsblechwechsler für das Einbringen des ersten und zweiten Laminationsblechs in die Aufnahme eine Laminationsblechausteilvorrichtung und für das Entnehmen des ersten und zweiten Laminationsblechs aus der Aufnahme eine Laminationsblechentnahmevorrichtung auf.

Ausführungsformen können den Vorteil haben, dass der Laminationsblechwechsler so ausgestaltet werden kann, dass Laminationsblechausteilvorrichtung und Laminationsblechentnahmevorrichtung räumlich voneinander beabstandet angeordnet werden können. Dies kann insbesondere vorteilhaft sein beim Eingliedern der Laminationsvorrichtung in eine Fertigungsstrecke.

Nach Ausführungsformen handelt es sich bei der Laminationsblechausteilvorrichtung und der Laminationsblechentnahmevorrichtung um dieselbe Vorrichtung, welche sowohl zum Austeilen als auch zum Entnehmen von Laminationsblechen konfiguriert ist.

Ausführungsformen können den Vorteil haben, dass der Laminationsblechwechsler eine Vorrichtung aufweist, welche sowohl als Laminationsblechausteilvorrichtung als auch als Laminationsblechentnahmevorrichtung konfiguriert ist. Die Verwendung einer einzigen Vorrichtung als Laminationsblechwechsler kann es beispielweise erlauben, die Laminiervorrichtungen kompakter zu gestalten.

Nach Ausführungsformen sind die Laminationsblechausteilvorrichtung und die Laminationsblechentnahmevorrichtung zwei voneinander unabhängige Vorrichtungen. Ausführungsformen können den Vorteil haben, dass das Austeilen und Entnehmen von Laminationsblechpaaren unabhängig voneinander erfolgen kann. Hierdurch kann insbesondere die Bestückungsgeschwindigkeit der Laminationsblechtransportvorrichtung mit Laminationsblechen erhöht und damit die Laminationseffizienz gesteigert werden.

Nach Ausführungsformen handelt es sich bei der Laminationsblechausteilvorrichtung und/oder der Laminationsblechentnahmevorrichtung jeweils um einen Arm eines Roboters, welcher ein freies Ende mit einem Laminationsblechgreifer zum Greifen der Laminationsbleche aufweist.

Ausführungsformen können den Vorteil haben, dass sie eine effiziente Handhabung der Laminationsbleche erlauben.

Nach Ausführungsformen handelt es sich bei der Laminationsblechtransportvorrichtung um einen Drehteller, auf welchem die Aufnahmen entlang des Umfangs des Drehtellers nebeneinander angeordnet sind, wobei die Laminierstationen entlang des Umfangs des Drehtellers angeordnet sind und wobei der Drehteller dazu konfiguriert ist, sich so um eine Mittelachse zu drehen, dass die Aufnahmen zu den Laminierstationen transportiert werden.

Ausführungsformen können den Vorteil haben, dass sie eine räumlich kompakte Ausgestaltung der Laminiervorrichtung erlauben. Zudem kann ein Drehteller den Vorteil aufweisen, dass durch ein Drehen um 360° ein verwendetes Laminationsblechpaar automatisch zu der Ausgangsposition zurücktransportiert wird. Das entsprechende Laminationsblechpaar kann so direkt weiterverwendet werden, indem das obere Laminationsblech angehoben und ein neues Materialbogenheft zwischen den Laminationsblechen angeordnet wird. Dies ist insbesondere vorteilhaft, wenn eine große Anzahl von Materialbogenheften zu laminieren ist, welche für identische Dokumenttypen vorgesehen sind.

Nach Ausführungsformen handelt es sich bei der Laminationsblechtransportvorrichtung um eine erste lineare Fördervorrichtung, wobei die Fördervorrichtung dazu konfiguriert ist, die Aufnahmen mit den Laminationsblechpaaren entlang einer Geraden von einem ersten Ende zu einem zweiten Ende der Fördervorrichtung zu bewegen, sodass die Aufnahmen mit Laminationsblechpaaren zu den Laminierstationen transportiert werden, welche zwischen dem ersten und dem zweiten Ende entlang der Geraden angeordnet sind.

Ausführungsformen können den Vorteil haben, dass die räumliche Erstreckung der Laminiervorrichtung in Querrichtung, d.h. senkrecht zu der Geraden, reduziert wird. Dies könnte es insbesondere ermöglichen, zusätzliche Bearbeitungsvorrichtungen zur Erstellung eines Ausweis-, Wert- oder Sicherheitsdokuments parallel neben die Laminiervorrichtung anzuordnen.

Nach Ausführungsformen umfasst die erste lineare Fördervorrichtung zwei sich zumindest teilweise parallel entlang der Geraden erstreckende Förderstränge, welche jeweils einander gegenüberliegende Halteelemente umfassen, die die Aufnahmen bilden und dazu konfiguriert sind jeweils ein Laminationsblechpaar zwischen den Fördersträngen zu halten.

Ausführungsformen können den Vorteil haben, dass der Bereich zwischen den Transportsträngen frei ist und die Transportstränge in einem Kreislauf wieder zurückgeführt werden können, ohne mit dem Laminationsvorgang der Laminierstation in Konflikt geraten.

Nach Ausführungsformen ist die Fördervorrichtung dazu konfiguriert, die Laminationsblechpaare von dem zweiten Ende zu dem ersten Ende zurück zu transportieren.

Ausführungsformen können den Vorteil haben, dass Laminationsbleche durch den Rücktransport direkt wieder für eine weitere Lamination eingesetzt werden können. Dies könnte die Effizienz des Laminationsvorgangs insbesondere in dem Fall steigern, dass eine Mehrzahl von Materialbogenheften für einen identischen Dokumenttyp zu laminieren sind.

Nach Ausführungsformen umfasst die Laminiervorrichtung eine zweite lineare Fördervorrichtung, welche dazu konfiguriert ist, die Laminationsblechpaaren von dem zweiten Ende zu dem ersten Ende der ersten Fördervorrichtung zurück zu transportieren.

Ausführungsformen können den Vorteil haben, dass verwendete Laminationsblechpaare effizient in den Ausgang des Laminationsvorgangs zurücktransportiert werden können und für eine Weiterverwendung zur Verfügung stehen.

Nach Ausführungsformen sind die Austeilvorrichtung und die Laminationsblechausteilvorrichtung am ersten Ende und die Entnahmevorrichtung und die Laminationsblechentnahmevorrichtung am zweiten Ende der ersten Fördervorrichtung angeordnet.

Ausführungsformen können den Vorteil haben, dass die Dauer der Materialbogenhefte in der Laminiervorrichtung minimiert und die Effizienz des Laminationsvorgangs bzw. der Durchsatz der Laminiervorrichtung maximiert wird.

Nach Ausführungsformen sind die Austeilvorrichtung und die Empfangsvorrichtung relativ zu dem von dem Drehteller gebildeten Kreis an den gegenüberliegenden Positionen angeordnet.

Nach Ausführungsformen sind die Laminationsblechausteilvorrichtung und die Laminationsblechentnahmevorrichtung an demselben Halbkreisabschnitt des von dem Drehteller gebildeten Kreises zwischen der Austeilvorrichtung und der Entnahmevorrichtung angeordnet.

Nach Ausführungsformen sind die Laminierstationen an dem dem Halbkreisabschnitt mit der Laminationsblechausteilvorrichtung und der Laminationsblechentnahmevorrichtung gegenüberliegenden Halbkreisabschnitt angeordnet.

Ausführungsformen können den Vorteil haben, dass die funktionale Raumaufteilung so optimiert wird, dass sich die einzelnen Vorrichtungen nicht gegenseitig behindern. Zudem kann der Durchsatz von Heften durch die Laminiervorrichtung optimiert werden.

Nach Ausführungsformen umfasst die Laminiervorrichtung eine Steuervorrichtung, welche eine Kontrollvorrichtung umfasst, wobei die Kontrollvorrichtung dazu konfiguriert ist, eine Beschädigung eines Laminationsblechs zu erfassen, wobei die Steuervorrichtung dazu konfiguriert ist, eine Auswahl eines zu erstellenden Dokumenttyps zu empfangen, ein Laminationsblechpaar zur Herstellung des ausgewählten Dokumenttyps aus der Laminationsblechvorratsstation auszuwählen, die Laminationsbleche des ausgewählten Laminationsblechpaars mit der Kontrollvorrichtung auf Beschädigungen zu prüfen, im Falle eines Erfassens einer Beschädigung das beschädigte Laminationsblech auszusortieren und ein alternatives Laminationsblech aus der Laminationsblechvorratsstation auszuwählen, welches zur Herstellung des ausgewählten Dokumenttyps konfiguriert ist.

Eine Beschädigung kann beispielsweise in einem Kratzer, einer Absplitterung und/oder einer Einbeulung der Laminationsfläche, insbesondere der aufzuprägenden Oberflächenstrukturen, eines Laminationsblechs bestehen.

Ausführungsformen können den Vorteil haben, dass eine effiziente Kontrolle der Laminationsbleche ermöglicht wird. Die entsprechende Steuervorrichtung kann als Teil der zentralen Steuervorrichtung ausgestaltet sein. Durch eine Prüfung der Laminationsbleche nach jedem Laminationsvorgang kann sichergestellt werden, dass beschädigte Laminationsbleche nicht für weitere Laminationsvorgänge verwendet werden und die Ausschussrate der fehlerhaft laminierten Materialbogenhefte reduziert werden. Zusätzlich kann die Kontrollvorrichtung dazu konfiguriert sein, die vom Laminationsvorgang resultierende Oberflächenstruktur des laminierten Materialbogenhefts zu prüfen und Fehler zu erkennen. Im Falle einer Fehlererkennung kann das entsprechende Laminationsblech aussortiert und durch ein alternatives Laminationsblech ersetzt werden. Ein alternatives Laminationsblech kann der Laminationsblechwechsler der Laminationsblechvorratsstation entnehmen.

Nach Ausführungsformen ist die Steuervorrichtung dazu konfiguriert, die aus der Laminationblechtransportvorrichtung entnommenen Laminationsbleche mit der Kontrollvorrichtung auf Beschädigungen zu prüfen und im Falle eines Erfassens einer Beschädigung auszusortieren.

Ausführungsformen können den Vorteil haben, dass Erkennen von Beschädigungen der Laminationsbleche bereits vor deren Verwendung erfolgt. Hierdurch können insbesondere Beschädigungen erkannt werden, welche durch die Lagerung der Laminationsbleche in der Laminationsblechvorratsstation oder durch den Transport zu bzw. von der Laminationsblechvorratsstation durch den Laminationsblechwechsler entstehen. Mithin kann vermieden werden, dass durch die Verwendung beschädigter Laminationsbleche fehlerhaft laminierte Verbundkörper erzeugt werden.

Nach Ausführungsformen weist die Kontrollvorrichtung eine Kamera zum Erfassen der Beschädigung auf.

Ausführungsformen können den Vorteil haben, dass die Kamera eine effiziente Erfassung von Beschädigungen ermöglicht.

Nach Ausführungsformen ist an den Laminationsblechen jeweils ein Laminationsblechträger angeordnet, welcher zum Greifen und/oder Lagern des Laminationsblechs konfiguriert ist.

Ausführungsformen können den Vorteil haben, dass durch die Verwendung von Laminationsblechträgern die Laminationsbleche von dem Laminationsblechwechsler nicht direkt gegriffen werden und die Laminationsbleche nicht direkt mit der Aufnahme der Laminationsblechtransportvorrichtung in Kontakt treten. Zudem kann vermieden werden, dass die Laminationsbleche bei der Lagerung in direkten Kontakt mit der Laminationsblechvorratsstation treten. Somit kann das Risiko von Beschädigungen der Oberflächenstruktur der Laminationsbleche weiter reduziert werden.

Nach Ausführungsformen ist der Laminationsblechträger mittels Fixierelementen jeweils zerstörungsfrei lösbar an dem Laminationsblech fixiert.

Ausführungsformen können den Vorteil haben, dass im Falle einer Beschädigung eines Laminationsblechs das entsprechende Laminationsblech ausgewechselt und der Laminationsblechträger weiterverwendet werden kann. Die Fixierelementen können beispielsweise für eine Fixierung mittels Rast- oder Schraubverbindung konfiguriert sein.

Nach Ausführungsformen umfasst die Laminationsblechvorratsstation ein Vorratsmagazin zum Lagern der Laminationsbleche in Magazinfächern.

Ausführungsformen können den Vorteil haben, dass sie eine übersichtliche und platzsparende Lagerung der Laminationsbleche in der Laminationsblechvorratsstation ermöglichen.

Nach Ausführungsform sind die dokumenttypspezifischen Laminationsbleche jeweils in einem vorbestimmten Magazinfach angeordnet.

Ausführungsformen können den Vorteil haben, dass die Laminationsbleche in der Laminationsblechvorratsstation jeweils am bestimmten Lagerplatz angeordnet sind. Im Falle eines Aussortierens eines der Laminationsbleche wird der entsprechende Lagerplatz durch ein neues Laminationsblech desselben Dokumenttyps ersetzt. Die zentrale Steuervorrichtung wird auf Basis des Identifikationssignals eines Dokumenttyps das Laminationsblech aus der Laminationsblechvorratsstation auswählen. Zur Auswahl von Lagerplätzen, aus denen Laminationsbleche zu entnehmen sind, greift die zentrale Steuervorrichtung beispielsweise auf eine Tabelle zu, welche in einer Datenbank gespeichert ist. Anhand der Tabelle kann sie die Lagerplätze identifizieren, an welchen Laminationsbleche des gewünschten Dokumenttyps gelagert sind. Die Auswahl des konkreten Lagerplatzes könnte dabei so erfolgen, dass Laminationsbleche desselben Laminationsblechtyps möglichst gleichmäßig verwendet werden.

Nach Ausführungsformen sind die dokumenttypspezifischen Laminationsbleche jeweils in beliebigen Magazinfächern angeordnet.

Ausführungsformen können den Vorteil haben, dass kein festes Lagerschema vorgegeben ist. Somit kann die Lagerung flexibler erfolgen. Insbesondere kann die Bestückung eines Magazinfachs von einem Laminationsblech einen ersten Dokumenttyp auf ein Laminationsblech für einen zweiten Dokumenttyp gewechselt werden, wenn beispielsweise im Schnitt mehr Materialbogenhefte für den zweiten Dokumenttyp zu laminieren sind.

Nach Ausführungsformen sind die Laminationsbleche jeweils mit einem Identifikator versehen, welcher dazu konfiguriert ist, den Dokumenttyp zu identifizieren, für dessen Herstellung das Laminationsblech konfiguriert ist, und/oder ein Laminationsblechpaar, welchem das Laminationsblech zugeordnet, und/oder das individuelle Laminationsblech selbst.

Ausführungsformen können den Vorteil haben, dass mit dem Identifikator der Dokumenttyp, für den das entsprechende Laminationsblech vorgesehen ist, erfasst werden kann. Die Einsortierung der Laminationsbleche in den Magazinfächern der Laminationsblechvorratsstation muss sich somit nicht nach einem vorgegebenen Schema orientieren, sondern kann frei erfolgen. Benötigt man ein Laminationsblech eines bestimmten Laminationsblechtyps, kann dieses anhand des Identifikators identifiziert werden. Eine Kombination mit einem vorgegebenen Bestückungsschema der Laminationsblechvorratsstation könnte es ermöglichen, bei Entnahme eines Laminationsblechs aus der Laminationsblechvorratsstation anhand des Identifikator sicherzustellen, dass das entnommene Laminationsblech auch tatsächlich ein Laminationsblech für den vorgesehenen Dokumenttyp ist und dass es zu keinen Einordnungsfehlern im Vorfeld gekommen ist. Gleichzeitig könnte auf Basis desvorgegebenen Bestückungsschema eine schnelle Auswahl getroffen werden, aus welchem Magazinfach der Laminationsblechvorratsstation ein Laminationsblech der benötigten Art entnommen werden kann.

Nach Ausführungsformen umfasst die Laminationsblechvorratsstation eine Kontrollvorrichtung, welche die Laminationsbleche anhand ihrer Identifikatoren erkennt und erfasst, in welches der Magazinfächer das Laminationsblech eingebracht wird. So könnte die Laminationsblechvorratsstation nachverfolgen wo welches Laminationsblech lagert, selbst wenn der Lagerplatz jeweils frei gewählt wird.

Nach Ausführungsformen hat die Steuervorrichtung Zugriff auf eine Tabelle, in welcher angegeben ist, welche Magazinfächer der Laminationsblechvorratsstation mit einem Laminationsblech bestückt sind und für welchen Dokumenttyp das entsprechende Laminationsblech ausgelegt ist. Dies könnte es ermöglichen, dass ein Laminationsblech nach Abschluss des Laminationsvorgangs nicht in dasselbe Magazinfach eingebracht werden muss, sondern auch in ein anderes freies Fach eingebracht werden kann, welches beispielsweise schneller zu erreichen ist.

Nach Ausführungsformen identifizieren die Identifikatoren nicht nur den Dokumenttyp für dessen Herstellung das Laminationsblech konfiguriert ist, sondern auch das individuelle Laminationsblech. Somit könnte von der zentralen Steuereinrichtung erfasst werden, welches Laminationsblech zur Lamination welches Materialbogenhefts verwendet wurde. Werden im Nachhinein Fehler bei der Lamination eines Materialbogenhefts festgestellt, so kann das für die fehlerhafte Lamination verwendete Laminationsblech identifiziert und aussortiert werden.

Nach Ausführungsformen ist der Identifikator an dem Laminationsblechträger des Laminationsblechs angeordnet.

Ausführungsformen können den Vorteil haben, dass der Identifikator leicht zu erfassen ist, auch wenn das Laminationsblech in dem Laminationsblechträger eingebracht ist.

Nach Ausführungsformen handelt es sich bei dem Identifikator um eine Seriennummer, einen Strichcode, einen QR-Code, oder einen RFID-Transponder.

Ausführungsformen können den Vorteil haben, dass sie eine leicht zu erfassende und kompakte Implementierung des Identifikators ermöglichen.

Nach Ausführungsformen umfasst der Laminationsblechwechsler eine Lesevorrichtung zum Lesen der Identifikatoren und ist dazu konfiguriert, mit der Lesevorrichtung den Dokumenttyp und/oder das Laminationsblechpaar und/oder das individuelle Laminationsblech zu identifizieren.

Ausführungsformen können den Vorteil haben, dass der Laminationsblechwechsler erfassen kann, welches Laminationsblech er tatsächlich aufnimmt.

Nach Ausführungsformen umfasst die Lesevorrichtung eine Kamera oder ein RFID-Lesegerät.

Ausführungsformen können den Vorteil haben, dass sie eine effiziente Erfassung des Identifikators ermöglichen.

Verfahren zum Laminieren eines Materialbogenhefts für einen aus einer Mehrzahl unterschiedlicher Ausweis-, Wert- oder Sicherheitsdokumenttypen ausgewählten Dokumenttyp, wobei das Materialbogenheft eine dokumenttypspezifische Auswahl von Materialbögen in einer dokumenttypspezifischen Reihenfolge umfasst.

Das Verfahren umfasst: Bereitstellen von Laminationsblechen unterschiedlicher Laminationsblechpaare für die unterschiedlichen Dokumenttypen, welche in einer Laminationsblechvorratsstation vorrätig gehalten werden.

Entnehmen eines ersten und eines zweiten Laminationsblechs der Laminationsblechpaare gemäß dem Dokumenttyp des Materialbogenhefts aus der Laminationsblechvorratsstation durch einen Laminationsblechwechsler.

Anordnen der beiden Laminationsbleche in einer Aufnahme einer Laminationsblechtransportvorrichtung durch den Laminationsblechwechsler, wobei zwischen den beiden Laminationsblechen durch eine Austeilvorrichtung das zu laminierende Materialbogenheft angeordnet wird.

Beaufschlagen der beiden Laminationsbleche in der Aufnahme mit Druck und Hitze in vordefinierter Weise sukzessive durch Laminierstationen, wobei die Laminationsblechtransportvorrichtung die beiden Laminationsbleche sukzessive zu den in einer Reihe nebeneinander angeordneten Laminierstationen transportiert.

Entnehmen des laminierten Materialbogenhefts zwischen den beiden Laminationsblechen durch eine Entnahmevorrichtung.

Ausführungsformen können einzeln oder in Kombination miteinander alle Verfahrensschritte umfassen, welche durch die zuvor beschriebenen Ausführungsformen der Laminiervorrichtung im Betrieb ausgeführt werden.

Im Folgenden werden Ausführungsformen der Erfindung anhand der Zeichnungen näher erläutert. Es zeigen:
- Figur 1: eine schematische Ansicht einer ersten beispielhaften Laminiervorrichtung,
- Figur 2: eine schematische räumliche Ansicht der Laminiervorrichtung aus Figur 1,
- Figuren 3: schematische Ansichten einer zweiten beispielhaften Laminiervorrichtung,
- Figuren 4: schematische Ansichten beispielhafter Materialbögen,
- Figuren 5: schematische Ansichten eines beispielhaften Materialbogenhefts,
- Figuren 6: schematische Ansichten eines beispielhaften Laminationsblechs mit Laminationsblechträger,
- Figuren 7: schematische Ansichten beispielhafter Oberflächenstrukturen des Laminationsblechs aus Figuren 6,
- Figuren 8: schematische Ansichten der Laminationsblechtransportvorrichtung aus Figur 1 und 2,
- Figuren 9: schematische Ansichten beispielhafter Laminationsbleche mit Laminationsblechträgern,
- Figur 10: eine schematische Ansicht einer dritten beispielhaften Laminiervorrichtung,
- Figuren 11: schematische Ansichten der Laminationsblechtransportvorrichtung aus Figur 10,
- Figuren 12: schematische Ansichten einer beispielhaften vierten Laminiervorrichtung,
- Figuren 13: schematische Ansichten der Laminationsblechtransportvorrichtung aus Figur 12,
- Figur 14: eine schematische Ansicht einer beispielhaften Laminationsblechvorratsstation.

Im Folgenden werden einander ähnliche Elemente mit den gleichen Bezugszeichen gekennzeichnet.

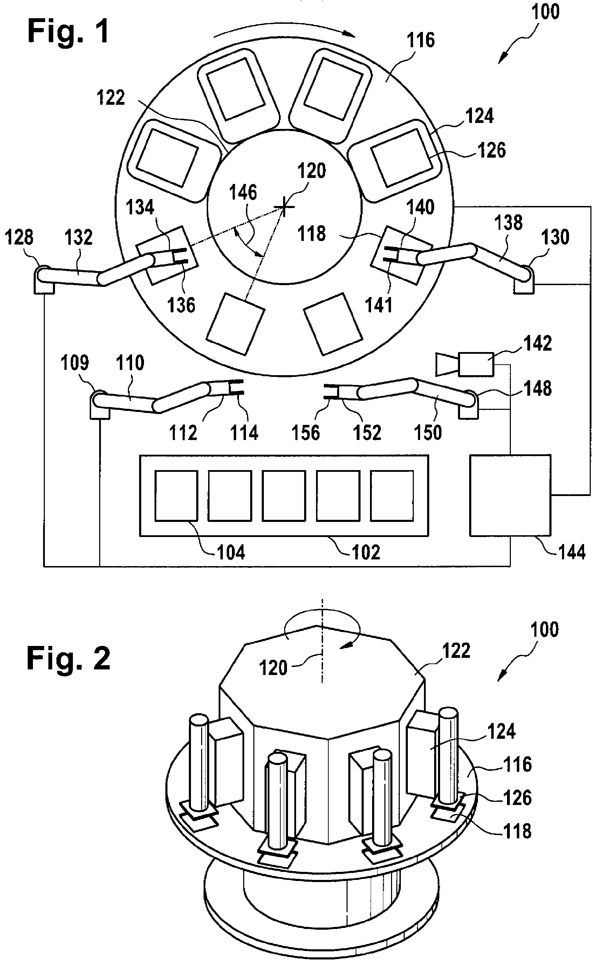

Figur 1 zeigt eine schematische Ansicht einer beispielhaften Laminiervorrichtung 100. Die Laminiervorrichtung 100 umfasst eine Laminationsblechvorratsstation 102, in welcher Laminationsbleche 104 unterschiedlicher Laminationsblechpaare für unterschiedliche Dokumenttypen vorrätig gehalten werden. Zudem umfasst die Laminiervorrichtung 100 einen Laminationsblechwechsler 108, welcher in der gezeigten Ausführungsform in Form einer Laminationsblechausteilvorrichtung 109 und einer Laminationsblechentnahmevorrichtung 148. Die Laminationsblechausteilvorrichtung 109 umfasst einen Roboterarms 110 mit einem freien beweglichen Ende 112. Am freien Ende 112 des Roboterarms 110 ist ein Laminationsblechgreifer 114 zum Greifen der Laminationsbleche 104 angeordnet. Die Laminationsblechentnahmevorrichtung 148 umfasst einen Roboterarms 150 mit einem freien beweglichen Ende 152, an dem ein Laminationsblechgreifer 156 zum Greifen eines Laminationsblechs 104 angeordnet ist.

Zudem umfasst die Laminiervorrichtung 100 eine Laminationsblechtransportvorrichtung 116 mit einer Mehrzahl von Aufnahmen 118 zum Aufnehmen von Laminationsblechpaaren. Die Laminationsblechtransportvorrichtung 116 wird in Form eines Drehtellers bereitgestellt, der dazu konfiguriert ist, sich um die Mittelachse 120 zu drehen. Dazu ist der Drehteller 116 drehbar an einer zentralen Trägereinheit 122 angeordnet, welche die ganze Laminiervorrichtung 100 trägt. An der zentralen Trägereinheit 122 sind zudem vier Laminierstationen 124 angeordnet, welche jeweils eine Laminationspresse 126 zum Beaufschlagen der Laminationsbleche 104 in den Aufnahmen 118 mit Druck und Hitze in vordefinierter Weise umfassen. Ferner umfasst die gezeigte Laminiervorrichtung 100 eine Austeilvorrichtung 128 und eine Entnahmevorrichtung 130. Die Austeilvorrichtung ist beispielsweise in Form eines Roboterarms 132 an einem freien beweglichen Ende 134 implementiert. An dem freien beweglichen Ende 134 ist eine Materialbogenaufnahmevorrichtung 136 zum Aufnehmen und Ablegen eines Materialbogenhefts angeordnet. Die Entnahmevorrichtung 130 ist beispielsweise in Form eines Roboterarms 138 implementiert, welcher ein freies bewegliches Ende 140 aufweist, an dem eine Aufnahmevorrichtung 141 zur Aufnahme eines Materialbogenhefts angeordnet ist.

Zudem umfasst die Laminiervorrichtung 100 eine Kontrollvorrichtung 142, bei welcher es sich beispielsweise um eine Kamera handelt. Die Kontrollvorrichtung 142 ist Teil des Systems, welches die Steuervorrichtung 144 umfasst. Die Kontrollvorrichtungen 142 und 143 prüfen die von dem Laminationsblechwechsler 108 aufgenommenen Laminationsbleche 104 visuell auf Beschädigungen. Im Falle eines Erfassens einer Beschädigung wird das Laminationsblech aussortiert. Falls keine Beschädigung erfasst wird, wird das entsprechende Laminationsblech in die Laminationsblechvorratsstation 102 oder eine Aufnahme 118 der Laminationsblechtransportvorrichtung 116 eingebracht. Die Steuervorrichtung 144 steuert die Kontrolle der Laminationsbleche durch die Kontrollvorrichtung 142. Zudem kann die Steuervorrichtung 144 als zentrale Steuervorrichtung dazu konfiguriert sein, das gesamte Laminationsverfahren zu steuern, welcher von der Laminiervorrichtung 100 ausgeführt wird.

Das Laminationsverfahren kann beispielsweise, ohne Beschränkung der Allgemeinheit, wie folgt aussehen: Die Steuervorrichtung 144 empfängt ein Identifikationssignal, welches den Dokumenttyp des laminierten Materialbogenhefts identifiziert. Die zentrale Steuervorrichtung 144 steuert den Laminationsblechwechsler 108 so an, dass er das Laminationsblech 104, welches zur Herstellung identifizierten Dokumenttyps konfiguriert ist, aus der Laminationsblechvorratsstation entnimmt. Hierzu greift der Laminationsblechwechsler 108 beispielsweise den Laminationsblechträger des entsprechenden Laminationsblechs 104 mit dem Greifer 114. Das entnommene Laminationsblech wird mit der Kontrollvorrichtung 142 auf Beschädigungen geprüft. Ist das entsprechende Laminationsblech 104 beschädigt, so wird es aussortiert und der Laminationsblechwechsler 108 wird von der zentralen Steuervorrichtung angesteuert, um ein anderes Laminationsblech, welches für denselben Dokumenttyp konfiguriert ist, aus der Laminationsblechvorratsstation 102 zu entnehmen. Ergibt die Prüfung des ersten Laminationsblechs 104, dass dieses keine Beschädigungen aufweist, so wird es in eine der Aufnahmen 118 der Laminationsblechtransportvorrichtung 116 eingebracht. In einem der nächsten Schritte steuert die zentrale Steuervorrichtung 144 die Austeilvorrichtung 128 so an, dass diese mit ihrer Materialbogenaufnahmevorrichtung 136 das zu laminierende Materialbogenheft aufnimmt und auf dem ersten Laminationsblech 104 in der Aufnahme 118 des Drehtellers 116 anordnet. Nach Ausführungsformen umfasst die Austeilvorrichtung 128 eine Positionserfassungsvorrichtung (nicht gezeigt), beispielsweise in Form einer Kamera, durch welche eine relative Ausrichtung des Materialbogenhefts auf dem ersten Laminationsblech erfasst und das entsprechende Materialbogenheft exakt positioniert wird. Zudem steuert die Steuervorrichtung 144 den Laminationsblechwechsler 148 an, um ein zweites Laminationsblech aus der Laminationsblechvorratsstation 102 zu entnehmen und auf dem zu laminierenden Materialbogenheft anzuordnen. Das zweite Laminationsblech wird hierfür in gleicher Weise wie bereits das erste Laminationsblech mittels der Kontrollvorrichtung 142 auf Beschädigungen untersucht. Weist es Beschädigungen auf, so wird es gegen ein anders Laminationsblech vom gleichen Laminationsblechtyps ausgetauscht. Nach Ausführungsformen sind erstes und zweites Laminationsblech 104 identisch. Nach anderen Ausführungsformen unterscheiden sich erstes und zweites Laminationsblech. Entsprechende Laminationsblechpaare umfassen in diesem Fall jeweils unterschiedliche Laminationsbleche 104, für welche festgelegt ist, welches als erstes und welches als zweites in die Aufnahme einzubringen ist.

Anschließend wird der Drehteller 116 in diskreten Schritten um einen vordefinierten Drehwinkel 146 gedreht. Sobald die Aufnahme 118 mit den beiden Laminationsblechen und dem Materialbogenheft in der ersten Laminierstation 124 positioniert ist, schließt sich die Laminationspresse 126 und beaufschlagt das Laminationsblechpaar mit Druck und Hitze in vordefinierter Weise. Nach Ablauf eines vordefinierten Zeitintervalls öffnet sich die Laminationspresse 126 und der Drehteller 116 wird den vordefinierten Drehwinkel 146 um eine Position weitergedreht, sodass das Laminationsblechpaar mit dem zu laminierenden Materialbogenheft an der zweiten Laminierstation 124 angeordnet wird. Dabei wird der entsprechende Laminationsvorgang in der dargestellten Laminiervorrichtung 100 in Teilschritte unterteilt. Für unterschiedliche Dokumenttypen können unterschiedliche Laminationszeiten notwendig sein. Diese können beispielsweise durch eine entsprechende Änderung der Zeitintervalle, nach denen der Drehteller gedreht wird, variiert werden oder dadurch, dass eine Winkelposition übersprungen wird. Im letzteren Fall wird ein Laminationsschritt ausgelassen. Dies hat im Falle von vier Laminierstationen zur Folge, dass der entsprechende Laminationsschritt für vier aufeinanderfolgende Materialbogenhefte ausgelassen wird. Verlässt das fertig laminierte Materialbogenheft die letzte Laminierstation 124, so steuert die Steuervorrichtung 144 den Laminationsblechwechsler 108 so an, dass dieser die beiden Laminationsbleche entnimmt. Zudem steuert sie die Entnahmevorrichtung 130 so an, dass diese das fertig laminierte Materialbogenheft mit ihrer Materialbogenaufnahmevorrichtung 136 aufnimmt.

Wird in der Aufnahme 118, in der das fertig laminierte Materialbogenheft angeordnet war, für die Lamination eines weiteren Materialbogenhefts eines anderen Dokumenttyps mit einem anderen Laminationsblechpaar benötigen, so wird das aufgenommene zweite Laminationsblech 104 nach einer Überprüfung auf Beschädigung mittels der Kontrollvorrichtung 142 zurück in die Laminationsblechvorratsstation 102 eingebracht. Werden bei der Prüfung jedoch Beschädigungen festgestellt, so wird das zweite Laminationsblech aussortiert. Ebenso wird das erste Laminationsblech durch den Laminationsblechwechsler aus der Aufnahme 118 entnommen, mittels der Kontrollvorrichtung 142 auf Beschädigungen kontrolliert und abhängig vom Ergebnis der Prüfung entweder aussortiert oder zurück in die Laminationsblechvorratsstation eingebracht. Als Nächstes entnimmt der Laminationsblechwechsler ein neues erstes Laminationsblech eines anderen Laminationsblechpaars, welches für die Lamination eines anderen Dokumenttyps konfiguriert ist, aus der Laminationsblechvorratsstation 102 und ordnet dieses in der Aufnahme 118 an. Der Laminationsvorgang beginnt damit wieder von vorne.

Wird das Laminationsblechpaar jedoch weiterhin in der Aufnahme 118 benötigt, da beispielsweise ein nachfolgendes Materialbogenheft desselben Dokumenttyps zur Lamination vorgesehen ist, so wird das zweite Laminationsblech für den Rücktransport durch die Laminationsblechtransportvorrichtung 116 mittels Laminationsblechwechsler wieder auf dem ersten Laminationsblech abgelegt.

Figur 2 zeigt eine perspektivische dreidimensionale Ansicht eines Ausschnitts der Laminiervorrichtung 100 aus Figur 1 von schräg oben. Zu sehen ist der kreisförmige Drehteller 116 mit den Aufnahmen 118, welcher dazu konfiguriert ist, sich um die Mittellängsachse 120 der stationären zentralen Trägereinheit 122 der Laminiervorrichtung 100 in diskreten Schritten zu drehen. Zu sehen sind zudem vier Laminierstationen 124, welche jeweils eine Laminationspresse 126 umfassen. Die Laminationspressen 126 sind dazu konfiguriert, in axialer Richtung zu der Mittellängsachse 120 auf den Drehteller 116 verfahren zu werden und dadurch Druck auf ein in der Aufnahme 118 angeordnetes Laminationsblechpaar auszuüben. Zudem sind die Laminationspressen dazu konfiguriert, das Laminationsblechpaar mit Hitze zu beaufschlagen.

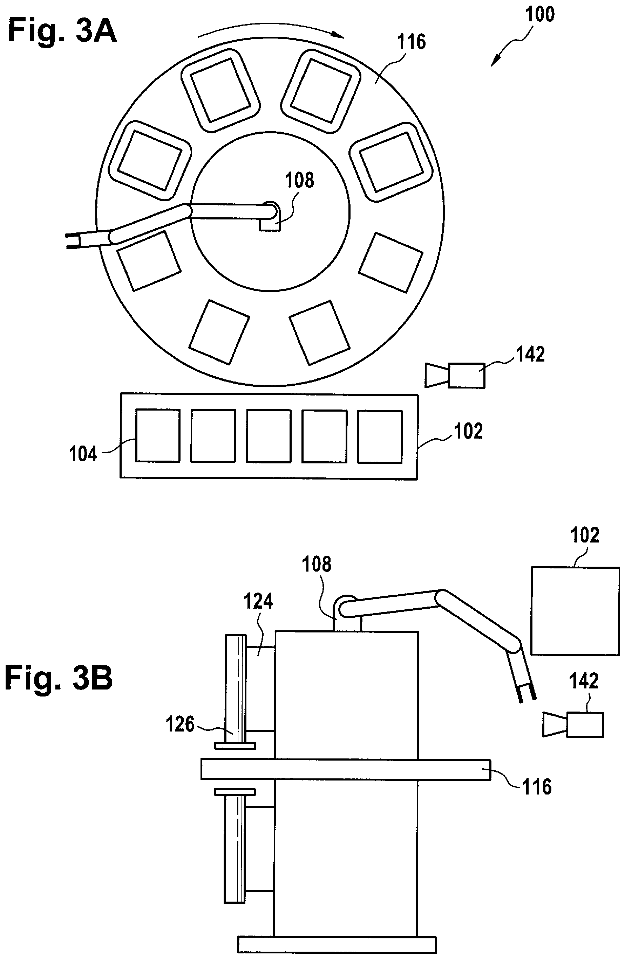

Figuren 3A und 3B zeigen schematische Ansichten einer beispielhaften zweiten Laminiervorrichtung. Diese Laminiervorrichtung entspricht im Wesentlichen den in den Figuren 1 und 2 gezeigten Laminiervorrichtungen 100. In der dargestellten Ausführungsform ist der Laminationsblechwechsler 108 auf der zentralen Trägereinheit 122 angeordnet. Der Laminationsblechwechsler 108 ist sowohl als Laminationsblechausteilvorrichtung als auch als Laminationsblechentnahmevorrichtung konfiguriert und übernimmt mithin beide Funktionen. Die Laminationsblechvorratsstation mit dem Laminationsblech 104 ist beispielsweise in Form eines Magazins mit einer Mehrzahl von Magazinfächern oberhalb des Drehtellers 116 auf Höhe des Laminationsblechwechslers 108 angeordnet.

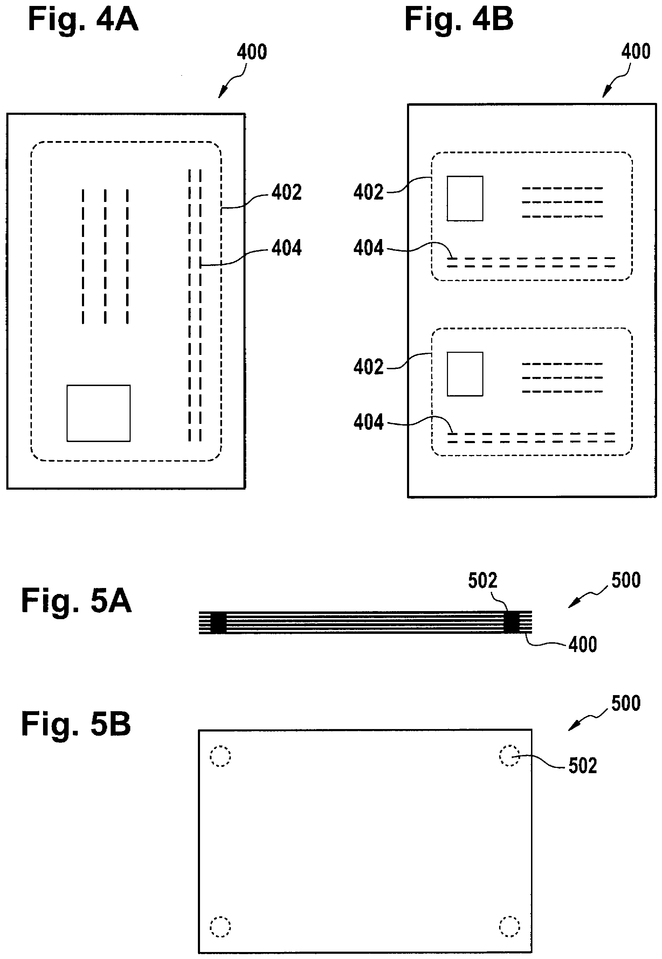

Figur 4A zeigt einen ersten beispielhaften Materialbogen 400, welcher zur Erstellung eines Materialbogenhefts für ein einzelnes Ausweis-, Wert- oder Sicherheitsdokument vorgesehen ist. Der gestrichelt dargestellte zentrale Bereich 402 umfasst Strukturen 404, welche dazu vorgesehen sind, Bestandteil des Dokumentenkörpers für das entsprechende Ausweis-, Wert- oder Sicherheitsdokument zu werden. Der Bereich 402 wird allgemein auch als Nutzen bezeichnet. Das Materialbogenheft weist Materialbögen 400 unterschiedlicher Materialbogentypen mit unterschiedlichen Strukturen 404 auf, aus welchen sich in der Summe die Strukturen des zu erstellenenden Dokumentenkörpers ergeben. Insbesondere können diese Strukturen 404 auch elektronische Komponenten, etwa einen Chip, eine Antenne, ein Display, eine Eingabevorrichtung und/oder Sensoren umfassen oder in Kombination miteinander bilden.

Figur 4B zeigt eine zweite Ausführungsform eines Materialbogens 400 dessen Nutzen zwei voneinander beabstandete Bereiche 402 mit Strukturen 404 zur Erstellung zweier Dokumentenkörper für zwei Ausweis-, Wert- oder Sicherheitsdokumente desselben Dokumenttyps umfasst.

Nach Ausführungsformen können Materialbögen 400 Nutzen für eine beliebige Anzahl von Dokumenten des gleichen Dokumenttyps umfassen. Dies kann den Vorteil haben, dass die Erstellung von Materialbogenheften für mehrere Ausweis-, Wert- oder Sicherheitsdokumente parallelisiert werden kann. Somit können die Effizienz und insbesondere die Geschwindigkeit des Zusammentragens und Erstellens erhöht werden.

Figur 5A zeigt ein Materialbogenheft 500, welches eine Mehrzahl von Materialbögen 400 umfasst, welche jeweils durch eine Ultraschallverschweißung im Bereich der Fügezone 502 mit dem gemäß der dokumenttypspezifischen Reihenfolge nachfolgenden Materialbogen fest verschweißt sind. Fest verschweißt bedeutet, dass die Materialbögen nicht zerstörungsfrei voneinander getrennt werden können.

Figur 5B zeigt eine Ansicht des Materialbogenhefts 500 senkrecht vom oben. In den Eckbereichen befindet sich jeweils eine Fügezone 502 der Ultraschallverschweißung, welche gepunktet dargestellt ist. Bei den Fügezonen 502 kann es sich beispielsweise um vier punktförmige bzw. kreisförmige oder rechteckige Bereiche handeln, zu deren Erzeugung Sonotroden mit kreisförmigen oder rechteckigen Schweißflächen verwendet wurden. Ausführungsformen können in den verschweißten Bereichen 502 in Form und Durchmesser variieren in Abhängigkeit von der Form der verwendeten Ultraschallsonotroden.

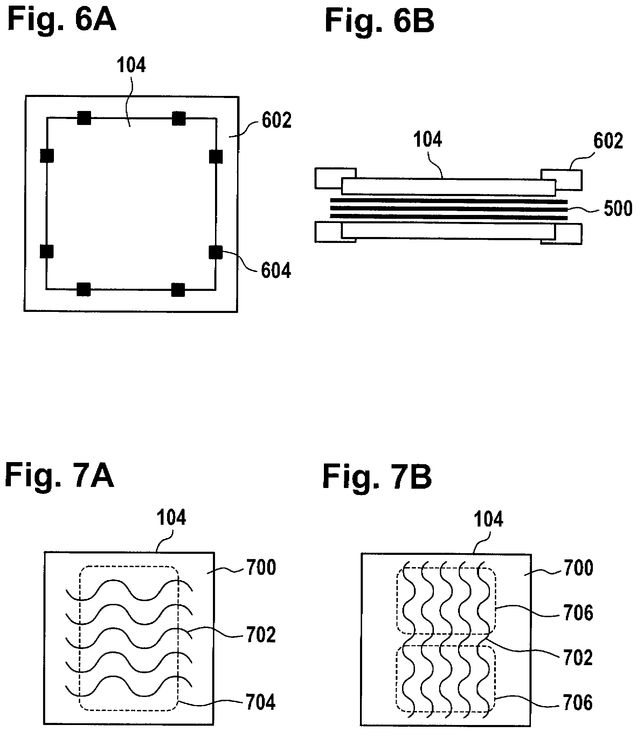

Figur 6A zeigt ein Laminationsblech 104 angeordnet an einem Laminationsblechträger 602. Der Laminationsblechträger 602 ist rahmenförmig ausgestaltet und an mehreren Positionen mittels Fixierelementen 604 mit dem Laminationsblech 104 verbunden. Figur 6B zeigt eine seitliche Ansicht eines entsprechenden Laminationsblechpaars, welches aus zwei Laminationsblechen 104 besteht und an einem Laminationsblechträger 602 angeordnet ist. Zwischen den beiden Laminationsblechen 104 ist ein Materialbogenheft 500 angeordnet. Hierbei ragt das Materialbogenheft 500 seitlich über die Laminationsbleche 104 hinaus, sodass diese bei einer Beaufschlagung mit Druck nicht direkt miteinander in Kontakt treten und somit ihr Verschleiß reduziert wird.

Figuren 7A und 7B zeigen schematische Ansichten beispielhafter Oberflächenstrukturen von zwei Laminationsblechen 104. Die entsprechenden Laminationsblechoberflächen 700 sind dazu konfiguriert, mit einem zu laminierenden Materialbogenhefts in Kontakt zu treten und dabei die Oberflächenstruktur 702 in die Oberfläche des Materialbogenhefts einzuprägen. Die gepunkteten Linien 704 und 706 zeigen jeweils die Umrisse eines aus dem Materialbogenheft zu erstellenden Dokumentenkörpers. Hierbei können die Strukturen 704, 706 für unterschiedliche Dokumenttypen konfiguriert sein. Beispielsweise kann die Struktur 704 für ein Materialbogenheft konfiguriert sein, welches zur Herstellung eines einzigen Ausweis-, Wert- oder Sicherheitsdokuments vorgesehen ist. Die Struktur 706 kann beispielsweise für ein Materialbogenheft konfiguriert sein, welches zur Herstellung einer Mehrzahl, beispielsweise zweier, Ausweis-, Wert- oder Sicherheitsdokumente vorgesehen ist.

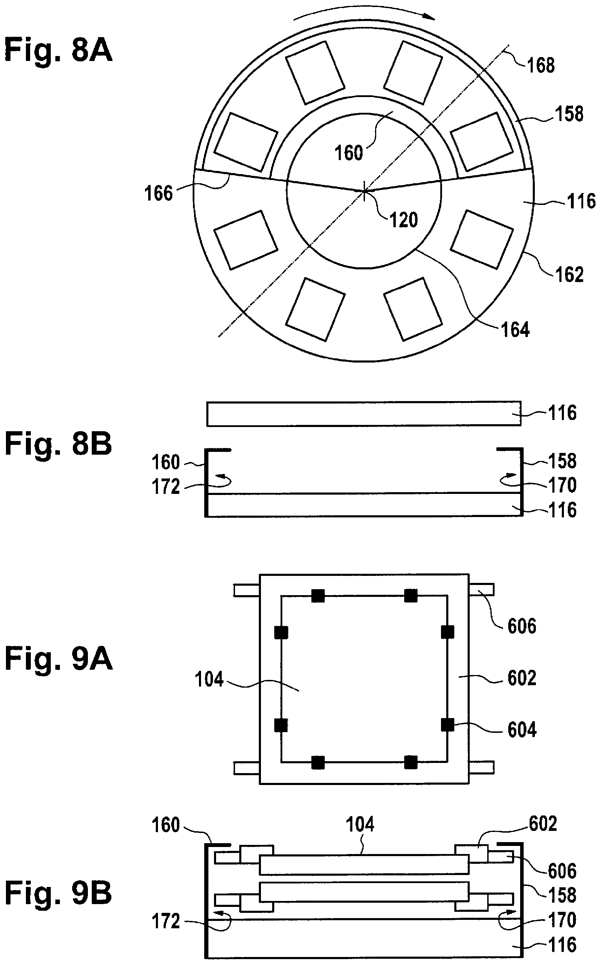

Figur 8A zeigt eine Detailansicht des Drehtellers 116 der Figuren 1 bis 3. An dem Drehteller 116 sind zwei parallele Führungsschienen 158 und 160 angeordnet, welche sich teilweise entlang des äußeren Umfangs 162 bzw. des inneren Umfangs 164 des Drehtellers 116 erstrecken. Der Abschnitt, über dem sich die Schienen 158, 160 erstrecken, entspricht dabei dem Winkelabschnitt 166, welcher die Position der vier Laminierstationen aus den Figuren 1 bis 3 (nicht gezeigt) umfasst. Die Schienen sind dabei stationär angeordnet, d.h. der Drehteller bewegt sich zwischen den seitlich angeordneten Schienen 158, 160. Figur 8B zeigt eine Schnittansicht des Drehtellers 116 entlang der Schnittlinie 168 aus Figur 8A. Die beiden Schienen 158, 160 weisen dabei eine Hinterschneidung in Form einer Nut 170, 172 auf.

Figuren 9A und 9B zeigen Laminationsbleche 104, welche jeweils in einem rahmenförmigen Laminationsblechträger 602 angeordnet und mittels Fixierelementen 604 fixiert sind. Die Laminationsblechträger 602 weisen in ihren Eckbereichen jeweils ein Führungselement 606 auf. Die entsprechende Führungselemente 606 sind, wie in den Figuren 9A und 9B gezeigt, darauf ausgelegt, beim Drehen des Drehtellers 116 in die Nuten 170, 172 der Schienen 158, 160 eingebracht und somit mit diesen in Kontakt zu treten. Hierdurch wird die Relativposition der Laminationsbleche zueinander fixiert und gegen Verschiebungen gesichert, sodass Laminationsfehler im Zuge des Laminationsvorgangs durch relative Positionsänderungen der Laminationsbleche 104 und des Materialbogenhefts zueinander verhindert werden.

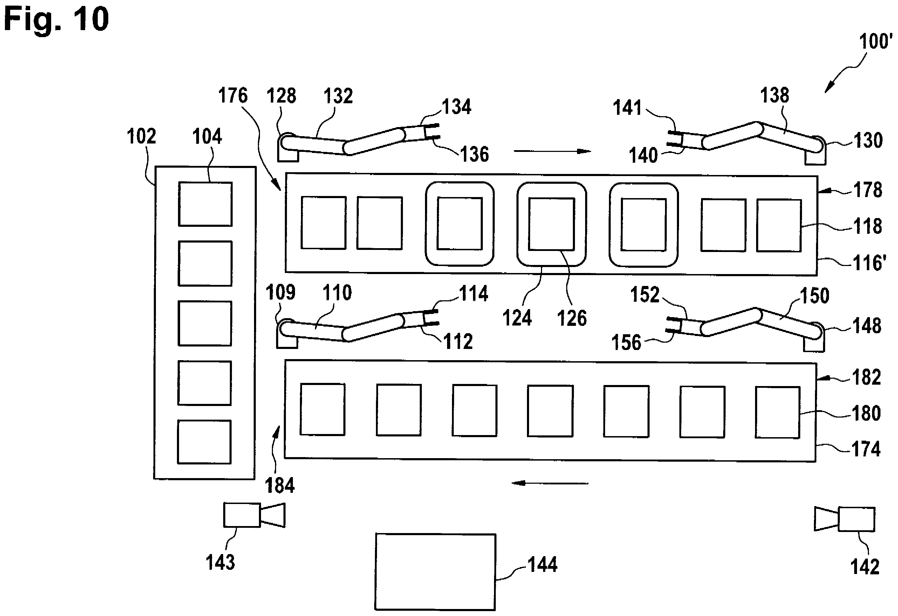

Figur 10 zeigt eine schematische Ansicht einer beispielhaften dritten Ausführungsform einer Laminiervorrichtung 100'. Die Laminiervorrichtung 100 umfasst einen Laminationsblechtransportvorrichtung 116' in Form einer linearen Fördervorrichtung, welche die Laminationsbleche 104 entlang einer Geraden transportiert. Die Laminierstationen 124 sind entlang der Längsrichtung der Förderrichtung 116' hintereinander angeordnet. In der gezeigten Ausführungsform der Figur 10 umfasst die Laminiervorrichtung 100' drei Laminierstationen 124. Ebenso wie Laminiervorrichtung 100 gemäß Figur 1 umfasst die Laminiervorrichtung 100' gemäß Figur 10 eine Austeilvorrichtung 128, welche in Form eines Roboterarms 132 mit einem freien beweglichen Ende 134 implementiert ist, an dem eine Materialbogenaufnahmevorrichtung 136 angeordnet ist. Zudem umfasst sie eine Entnahmevorrichtung 130, welche in Form eines Roboterarms 138 mit einem freien beweglichen Ende 140 implementiert ist, an dem die Materialbogenaufnahmevorrichtung 141 angeordnet ist. Ferner umfasst die Laminiervorrichtung 100' eine Laminationsblechentnahmevorrichtung 148, welche in Form eines Roboterarms 150 mit einem freien beweglichen Ende 152 implementiert ist, an dem ein Laminationsblechgreifer 156 zum Greifen eines Laminationsblechs 104 angeordnet ist. Des Weiteren umfasst die Laminiervorrichtung 100' eine Laminationsblechentnahmevorrichtung 109, welche in Form eines Roboterarms 110 mit einem frei beweglichen Ende 112 implementiert ist, an dem ein Laminationsblechgreifer 114 zum Greifen eines Laminationsblechs 104 angeordnet ist. Die Laminiervorrichtung 100' gemäß Figur 10 umfasst neben einer ersten Kontrollvorrichtung 142 eine zweite Kontrollvorrichtung 143 zur Prüfung von Laminationsblechen auf Beschädigungen, wobei die erste Kontrollvorrichtung 142 zur Kontrolle der von der Laminationsblechentnahmevorrichtung 148 entnommenen Laminationsbleche vorgesehen ist und die zweite Kontrollvorrichtung 143 zur Kontrolle in der von der Laminationsblechausteilvorrichtung 109 auszuteilenden Laminationsbleche. Die Vorrichtung 100' umfasst zudem eine Laminationsblechvorratsstation 102 mit Laminationsblechen 104 unterschiedlicher Laminationsblechpaare für unterschiedliche Dokumenttypen.

Neben der linearen Fördervorrichtung 116' ist eine weitere lineare Fördervorrichtung 174 zum Rücktransport der an dem zweiten Ende 178 der Laminationsblechtransportvorrichtung 116' von der Laminationsblechentnahmevorrichtung 148 entnommenen Laminationsbleche zu dem ersten Ende 176 der Laminationsblechtransportvorrichtung 116'. Die zweite lineare Fördervorrichtung 174 entspricht in der dargestellten Ausführungsform der ersten linearen Laminationsblechtransportvorrichtung 116', verläuft parallel zu dieser und transportiert die Laminationsbleche in die entgegengesetzte Richtung.

Im Falle der Laminiervorrichtung 100' gemäß Figur 10 werden die Laminationsblechpaare am zweiten Ende 178 der Laminationsblechtransportvorrichtung 116' grundsätzlich von der Laminationsblechentnahmevorrichtung 148 mittels des Greifers 156 entnommen und in eine Aufnahme 180 der zweiten Fördervorrichtung 174 zum Rücktransport angeordnet. Gelangt ein Laminationsblechpaar am zweiten Ende 184 der zweiten Fördervorrichtung 174 an, so wird es von der Laminationsblechausteilvorrichtung 109 mittels des Laminationsblechgreifers 114 aufgenommen und entweder zur erneuten Verwendung in einer Aufnahme 118 am ersten Ende 176 der ersten Fördervorrichtung 116' oder zur Verwahrung für einen zukünftigen Gebrauch zurück in die Laminationsblechvorratsstation 102 eingebracht. Bei der Entnahme der Laminationsbleche durch die Laminationsblechausteilvorrichtung 109 aus der zweiten Fördervorrichtung 174 werden die entnommenen Laminationsbleche mittels der Kontrollvorrichtung 143 auf Beschädigungen überprüft. Im Falle einer Beschädigung wird das entsprechende Laminationsblech aussortiert, andernfalls weiterverwendet. Die Laminiervorrichtung 100' weist zudem eine zentrale Steuervorrichtung 144 zum Steuern der Laminiervorrichtung auf. Hierzu ist die zentrale Steuervorrichtung 144 drahtbehaftet und/oder drahtlos mit den einzelnen Vorrichtungen, sodass sie deren Aktionen steuern kann.

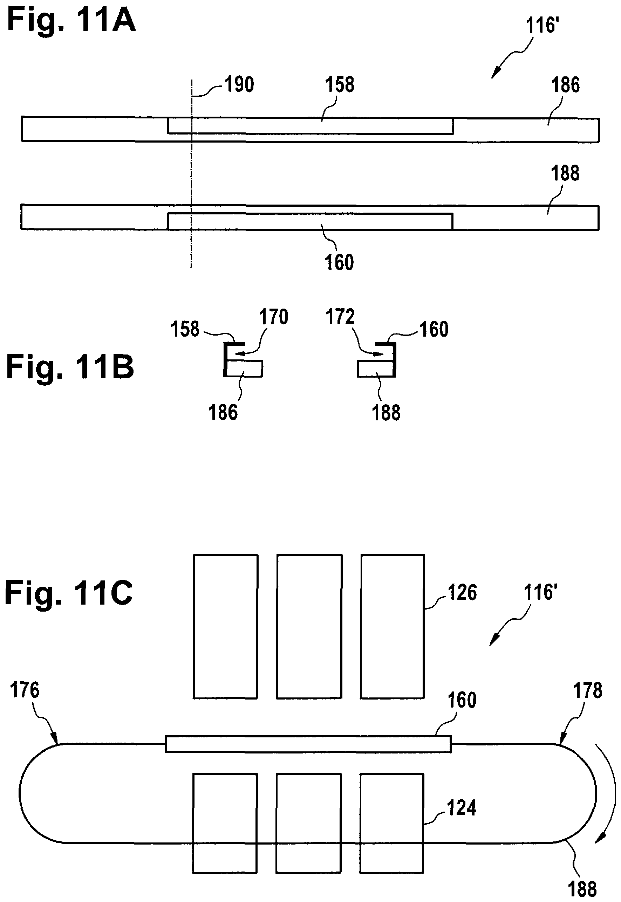

Figuren 11A bis 11C zeigen Detailansichten zu der ersten Fördervorrichtung 116' aus Figur 10. Die erste lineare Fördervorrichtung 116' umfasst zwei parallel zueinander angeordnete Förderstränge 186 und 188. An den beiden Fördersträngen 186 und 188 ist jeweils eine Führungsschiene 158, 160 angeordnet. Diese sind stationär gegenüber der Bewegung der Förderstränge 186 und 188 und erstrecken sich parallel zueinander entlang des Abschnitts der ersten Fördervorrichtung 116', in dem die Laminierstationen (nicht gezeigt) angeordnet sind. Figur 11B zeigt eine Schnittansicht durch die beiden Förderstränge 186, 188 entlang der Schnittlinie 190. Die beiden Schienen 158, 160, zwischen denen sich die Förderstränge 186, 188 bewegen, weisen jeweils eine Hinterschneidung in Form einer Nut 170, 172 auf, die dazu konfiguriert sind Führungselemente 606 der Laminationsblechträger 602 aufzunehmen. Figur 11C zeigt eine seitliche Ansicht der ersten Fördervorrichtung 116' sowie der Laminierstationen 124 mit jeweils einer Laminationspresse 126. Die parallelen Förderstränge 186, 188 bewegen sich zyklisch zwischen dem ersten Ende 176 und dem zweiten Ende 178 der Laminationsblechtransportvorrichtung 116'. Um Kollisionen mit den Laminierstationen 124 zu verhindern, müssen die verwendeten Laminationsbleche am zweiten Ende 178 der Laminationsblechtransportvorrichtung 116' entnommen werden.

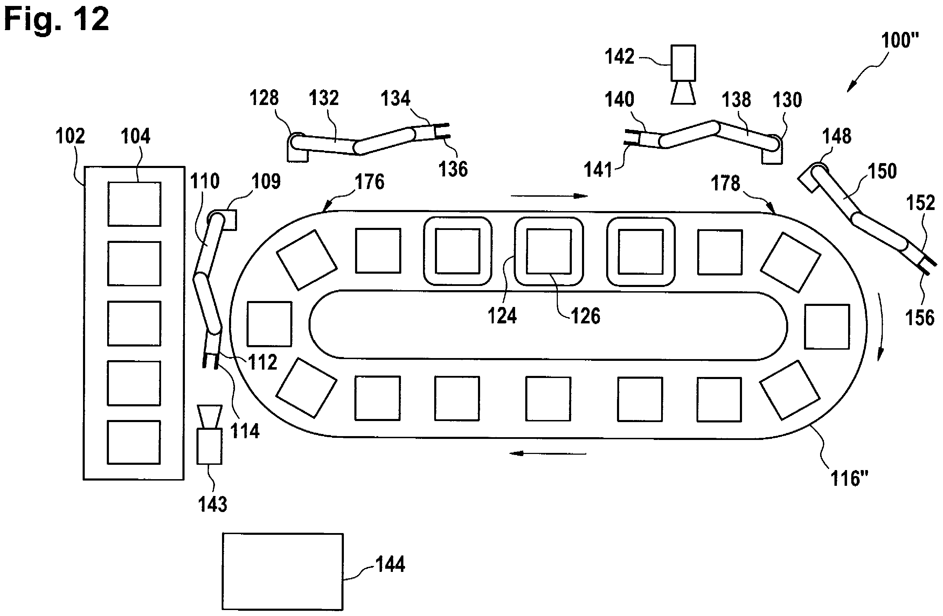

Figur 12 zeigt eine schematische Ansicht einer beispielhaften vierten Laminiervorrichtung 100". Diese entspricht im Wesentlichen der Laminiervorrichtung 100' aus Figur 10 bis auf die Laminationsblechtransportvorrichtung 116" und das Fehlen einer weiteren Fördervorrichtung 174. Die Laminationsblechtransportvorrichtung 116" ist dazu konfiguriert, die Laminationsbleche vom zweiten Ende 178 zum ersten Ende 176 zurück zu transportieren. Hierbei bewegt sich die Laminationsblechtransportvorrichtung 116" in einer horizontalen Ebene auf einer geschlossenen Bahn. Diese Bahn umfasst beispielsweise zwei parallele Längsabschnitte, deren Enden jeweils durch ein Kreisbogensegment miteinander verbunden sind. Dies kann es der Laminationsblechtransportvorrichtung 116" ermöglichen, verwendete Laminationsblechpaare wieder zurück zu transportieren, ohne dass diese die Laminierstationen 124 beim Laminieren behindern.

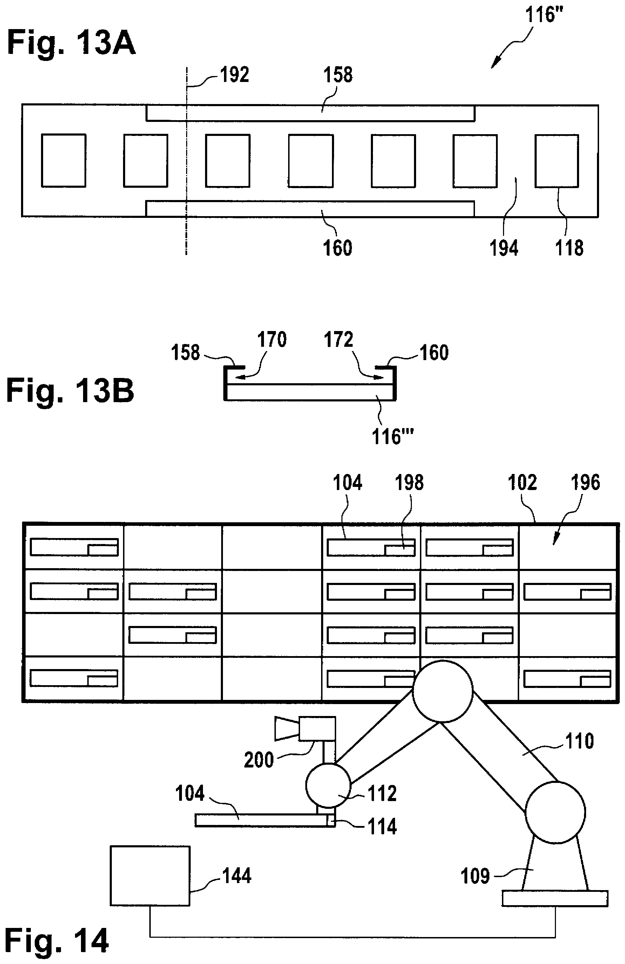

Figuren 13A und 13b zeigen in Detailansichten der Laminationsblechtransportvorrichtung 116". An der Laminationsblechtransportvorrichtung 116" sind zwei parallele Schienen 158, 160 angeordnet, welche sich entlang des im Bereich der Laminationsblechtransportvorrichtung 116" erstrecken, in dem auch die Laminierstationen 124 (nicht gezeigt) angeordnet sind. Figur 13B zeigt eine Schnittansicht entlang der Schnittlinie 192 durch die Laminationsblechtransportvorrichtung 116". Die Schienen 158, 160, zwischen denen sich die Laminationsblechtransportvorrichtung 116" entlang bewegt, umfassen jeweils eine Hinterschneidung in Form einer Nut 170, 172 zum Führen von Führungselementen 606 der Laminationsblechträger 602. Zwischen den Aufnahmen 118 weist die Laminationsblechtransportvorrichtung 116" Querstreben auf, sodass die Aufnahmen 118 als Ausnehmungen der Laminationsblechtransportvorrichtung 116" ausgebildet sind.

Figur 14 zeigt schließlich die Laminationsblechvorratsstation 102, welche eine Mehrzahl an Magazinfächern 196 aufweist, in denen Laminationsbleche 104 angeordnet sind. Die Laminationsbleche 104 weisen Identifikatoren 198 zur Identifikation des Dokumenttyps auf, zu deren Herstellung die Laminationsbleche 104 vorgesehen sind. Nach Ausführungsformen identifizieren die Identifikatoren 198 zudem die individuellen Laminationsbleche 104. Die Laminationsblechausteilvorrichtung 109 ist in Form eines Roboterarms 110 implementiert, an dessen freiem Ende 112 ein Laminationsblechgreifer 114 zum Greifen eines Laminationsblechs 104 angeordnet ist. Zudem ist in der dargestellten Ausführungsform an dem freien Ende 112 des Roboterarms 110 zusätzlich eine Erfassungsvorrichtung 200 zum Erfassen des Identifikators 198 der Laminationsbleche 104 angeordnet. Die Auswertung der mittels der Erfassungsvorrichtung 200 erfassten Identifikatoren 198 sowie die Steuerungen der Laminationsblechausteilvorrichtung 109 erfolgt beispielsweise mittels der zentralen Steuervorrichtung 144, welche mit der Laminationsblechausteilvorrichtung 109 in Kommunikationsverbindung steht.

### Bezugszeichenliste

- 100: Laminiervorrichtung
- 100': Laminiervorrichtung
- 100": Laminiervorrichtung
- 102: Laminationsblechvorratsstation
- 104: Laminationsblech
- 108: Laminationsblechwechsler
- 109: Laminationsblechausteilvorrichtung
- 110: Roboterarm
- 112: freies Ende
- 114: Laminationsblechgreifer
- 116: Laminationsblechtransportvorrichtung (Drehteller)
- 116': Laminationsblechtransportvorrichtung (Fördervorrichtu ng)
- 116": Laminationsblechtransportvorrichtung (Fördervorrichtu ng)
- 118: Aufnahme
- 120: Achse
- 122: zentrales Element
- 124: Laminierstation
- 126: Laminationspressse
- 128: Austeilvorrichtung
- 130: Entnahmevorrichtung
- 132: Roboterarm
- 134: freies Ende
- 136: Materialbogenaufnahmevorrichtung
- 138: Roboterarm
- 140: freies Ende
- 141: Materialbogenaufnahmevorrichtung
- 142: Kontrollvorrichtung
- 143: Kontrollvorrichtung
- 144: Steuervorrichtung
- 146: Drehwinkel
- 148: Laminationsblechentnahmevorrichtung
- 150: Roboterarm
- 152: freies Ende
- 156: Laminationsblechgreifer
- 158: Schiene
- 160: Schiene
- 162: äußerer Umfang
- 164: innerer Umfang
- 166: Winkelabschnitt
- 168: Schnittlinie
- 170: Nut
- 172: Nut
- 174: zweite Fördervorrichtung
- 176: erstes Ende
- 178: zweites Ende
- 180: Aufnahme
- 182: erstes Ende
- 184: zweites Ende
- 186: Förderstrang
- 188: Förderstrang
- 190: Schnittlinie
- 192: Schnittlinie
- 194: Strebe
- 196: Magazinfach
- 198: Identifikator
- 200: Lesevorrichtung
- 400: Materialbogen
- 402: zentraler Bereich
- 404: Struktur
- 500: Materialbogenheft
- 502: Schweißbereich
- 602: Laminationsblechträger
- 604: Befestigungselement
- 606: Führungselement
- 700: Laminationsblechoberfläche
- 702: Struktur
- 704: Dokumentkörper
- 706: Dokumentkörper

## Patentansprüche

1. Laminiervorrichtung (100, 100', 100") zum Laminieren eines Materialbogenhefts (500) für einen aus einer Mehrzahl unterschiedlicher Ausweis-, Wert- oder Sicherheitsdokumenttypen ausgewählten Dokumenttyp, wobei das Materialbogenheft (500) eine dokumenttypspezifische Auswahl von Materialbögen (400) in einer dokumenttypspezifischen Reihenfolge umfasst,
wobei die Laminiervorrichtung (100, 100', 100") umfasst,
eine Laminationsblechvorratsstation (102), welche Laminationsbleche (104) unterschiedlicher Laminationsblechpaare für die unterschiedlichen Dokumenttypen vorrätig hält,
einen Laminationsblechwechsler (108), welcher dazu konfiguriert ist, ein erstes und ein zweites Laminationsblech (104) der Laminationsblechpaare gemäß dem Dokumenttyp des Materialbogenhefts (500) aus der Laminationsblechvorratsstation (102) zu entnehmen und in einer Aufnahme einer Laminationsblechtransportvorrichtung (116, 116', 116") anzuordnen,
Laminierstationen (124), welche in einer Reihe nebeneinander angeordnet sind, wobei die Laminationsblechtransportvorrichtung (116, 116', 116") dazu konfiguriert ist, die beiden Laminationsbleche (104) in der Aufnahme (118) nacheinander zu den einzelnen Laminierstationen (124) zu transportieren, welche jeweils dazu konfiguriert sind, die beiden Laminationsbleche (104) zum Laminieren des Materialbogenhefts (500) mit Druck und Hitze in vordefinierter Weise zu beaufschlagen,
eine Austeilvorrichtung (128), welche dazu konfiguriert ist, das zu laminierende Materialbogenheft (500) zwischen das erste und zweite Laminationsblech (104) in der Aufnahme (118) einzubringen, und eine Entnahmevorrichtung (130), welche dazu konfiguriert ist, das laminierte Materialbogenheft (500) zwischen den beiden Laminationsblechen (104) zu entnehmen.

2. Laminiervorrichtung (100, 100', 100") nach Anspruch 1, wobei der Laminationsblechwechsler (108) dazu konfiguriert ist, im Falle dass nachfolgend ein weiteres Materialbogenheft (500) eines anderen Dokumenttyps zu laminieren ist, das erste und zweite Laminationsblech (104) zu entnehmen, die beiden Laminationsbleche (104) in die Laminationsblechvorratsstation (102) einzubringen, eines der Laminationsblechpaare für den anderen Dokumenttyp aus der Laminationsblechvorratsstation (102) zu entnehmen und in der Aufnahme (118) der Laminationsblechtransportvorrichtung (116, 116', 116") anzuordnen, und/oder
wobei die Laminationsblechtransportvorrichtung (116, 116', 116") eine Mehrzahl der Aufnahmen (118) umfasst, welche in einer Reihe nebeneinander angeordnet und jeweils dazu konfiguriert sind, eines der Laminationsblechpaare aufzunehmen.

3. Laminiervorrichtung (100, 100', 100") nach Anspruch 2, wobei der Laminationsblechwechsler (108) für das Einbringen des ersten und zweiten Laminationsblechs (104) in die Aufnahme (118) eine Laminationsblechausteilvorrichtung (109) und für das Entnehmen des ersten und zweiten Laminationsblechs (104) aus der Aufnahme (118) eine Laminationsblechentnahmevorrichtung (148) aufweist.

4. Laminiervorrichtung (100, 100', 100") nach Anspruch 3, wobei es sich bei der Laminationsblechausteilvorrichtung (109) und/oder der Laminationsblechentnahmevorrichtung (148) jeweils um einen Arm eines Roboters (110, 150) handelt, welcher ein freies Ende (112, 152) mit einem Laminationsblechgreifer (114, 156) zum Greifen der Laminationsbleche (104) aufweist.

5. Laminiervorrichtung (100, 100', 100") nach einem der vorangehenden Ansprüche, wobei es sich bei der Laminationsblechtransportvorrichtung um einen Drehteller (116) handelt, auf welchem die Aufnahmen (118) entlang des Umfangs (162) des Drehtellers (116) nebeneinander angeordnet sind, wobei die Laminierstationen (124) entlang des Umfangs (162) des Drehtellers (116) angeordnet sind und wobei der Drehteller (116) dazu konfiguriert ist, sich so um eine Mittelachse (120) zu drehen, dass die Aufnahmen (118) zu den Laminierstationen (124) transportiert werden.

6. Laminiervorrichtung (100, 100', 100") nach einem der Ansprüche 1 bis 4, wobei es sich bei der Laminationsblechtransportvorrichtung (116', 116') um eine erste lineare Fördervorrichtung handelt, und wobei die Fördervorrichtung dazu konfiguriert ist, die Aufnahmen (118) mit den Laminationsblechpaaren entlang einer Geraden von einem ersten Ende (176) zu einem zweiten Ende (178) der Fördervorrichtung zu bewegen, sodass die Aufnahmen mit Laminationsblechpaaren zu den Laminierstationen (124) transportiert werden, welche zwischen dem ersten und dem zweiten Ende (176, 178) entlang der Geraden angeordnet sind.

7. Laminiervorrichtung (100, 100', 100") nach Anspruch 6, wobei die erste lineare Fördervorrichtung zwei sich zumindest teilweise parallel entlang der Geraden erstreckende Förderstränge (186, 188) umfasst, welche jeweils einander gegenüberliegende Halteelemente umfassen, die die Aufnahmen bilden und dazu konfiguriert sind jeweils ein Laminationsblechpaar zwischen den Fördersträngen (186, 188) zu halten, und/oder
wobei die Laminiervorrichtung (100, 100', 100") eine zweite lineare Fördervorrichtung (174) umfasst, welche dazu konfiguriert ist, die Laminationsblechpaaren von dem zweiten Ende (178) zu dem ersten Ende (176) der ersten Fördervorrichtung zurück zu transportieren, und/oder
wobei die Austeilvorrichtung (128) und die Laminationsblechausteilvorrichtung (109) am ersten Ende (176) und die Entnahmevorrichtung (130) und die Laminationsblechentnahmevorrichtung (148) am zweiten Ende (178) der ersten Fördervorrichtung angeordnet sind.

8. Laminiervorrichtung (100, 100', 100") nach einem der vorangehenden Ansprüche mit einer Steuervorrichtung (144), welche eine Kontrollvorrichtung (142, 143) umfasst, wobei die Kontrollvorrichtung (142, 143) dazu konfiguriert ist, eine Beschädigung eines Laminationsblechs (104) zu erfassen, wobei die Steuervorrichtung (144) dazu konfiguriert ist, eine Auswahl eines zu erstellenden Dokumenttyps zu empfangen, ein Laminationsblechpaar zur Herstellung des ausgewählten Dokumenttyps aus der Laminationsblechvorratsstation (102) auszuwählen, die Laminationsbleche (104) des ausgewählten Laminationsblechpaars mit der Kontrollvorrichtung (142, 143) auf Beschädigungen zu prüfen, im Falle eines Erfassens einer Beschädigung das beschädigte Laminationsblech (104) auszusortieren und ein alternatives Laminationsblech (104) aus der Laminationsblechvorratsstation auszuwählen, welches zur Herstellung des ausgewählten Dokumenttyps konfiguriert ist.

9. Laminiervorrichtung (100, 100', 100") nach Anspruch 8, wobei die Steuervorrichtung (144) dazu konfiguriert ist, die aus der Laminationblechtransportvorrichtung (116, 116', 116") entnommenen Laminationsbleche (104) mit der Kontrollvorrichtung (142, 143) auf Beschädigungen zu prüfen und im Falle eines Erfassens einer Beschädigung auszusortieren.

10. Laminiervorrichtung (100, 100', 100") nach einem der vorangehenden Ansprüche, wobei an den Laminationsblechen (104) jeweils ein Laminationsblechträger (602) angeordnet ist, welcher zum Greifen und/oder Lagern des Laminationsblechs (104) konfiguriert ist.

11. Laminiervorrichtung (100, 100', 100") nach Anspruch 10, wobei der Laminationsblechträger mittels Fixierelementen (604) jeweils zerstörungsfrei lösbar an dem Laminationsblech (104) fixiert ist.

12. Laminiervorrichtung (100, 100', 100") nach einem der vorangehenden Ansprüche, wobei die Laminationsblechvorratsstation (102) ein Vorratsmagazin zum Lagern der Laminationsbleche (104) in Magazinfächern (196) umfasst.

13. Laminiervorrichtung (100, 100', 100") nach einem der vorangehenden Ansprüche, wobei die Laminationsbleche (104) jeweils mit einem Identifikator (198) versehen sind, welcher dazu konfiguriert ist, den Dokumenttyp zu identifizieren, für dessen Herstellung das Laminationsblech (104) konfiguriert ist, und/oder ein Laminationsblechpaar, welchem das Laminationsblech (104) zugeordnet, und/oder das individuelle Laminationsblech (104) selbst.

14. Laminiervorrichtung (100, 100', 100") nach Anspruch 13, wobei der Laminationsblechwechsler (108) eine Lesevorrichtung (200) zum Lesen der Identifikatoren (198) umfasst und dazu konfiguriert ist, mit der Lesevorrichtung (200) den Dokumenttyp und/oder das Laminationsblechpaar und/oder das individuelle Laminationsblech (104) zu identifizieren.

15. Verfahren zum Laminieren eines Materialbogenhefts (500) für einen aus einer Mehrzahl unterschiedlicher Ausweis-, Wert- oder Sicherheitsdokumenttypen ausgewählten Dokumenttyp unter Verwendung einer Laminiervorrichtung (100, 100', 100") nach einem der vorangehenden Ansprüche, wobei das Materialbogenheft (500) eine dokumenttypspezifische Auswahl von Materialbögen (400) in einer dokumenttypspezifischen Reihenfolge umfasst,
wobei das Verfahren umfasst,
Bereitstellen von Laminationsblechen (104) unterschiedlicher Laminationsblechpaare für die unterschiedlichen Dokumenttypen, welche in einer Laminationsblechvorratsstation (102) vorrätig gehalten werden,
Entnehmen eines ersten und eines zweiten Laminationsblechs (104) der Laminationsblechpaare gemäß dem Dokumenttyp des Materialbogenhefts (500) aus der Laminationsblechvorratsstation (102) durch einen Laminationsblechwechsler (108),
Anordnen der beiden Laminationsbleche (104) in einer Aufnahme einer Laminationsblechtransportvorrichtung (116, 116', 116") durch den Laminationsblechwechsler (108), wobei zwischen den beiden Laminationsblechen (104) durch eine Austeilvorrichtung (128) das zu laminierende Materialbogenheft (500) angeordnet wird,
Beaufschlagen der beiden Laminationsbleche (104) in der Aufnahme mit Druck und Hitze in vordefinierter Weise sukzessive durch Laminierstationen (124), wobei die Laminationsblechtransportvorrichtung (116, 116', 116") die beiden Laminationsbleche (104) sukzessive zu den in einer Reihe nebeneinander angeordneten Laminierstationen (124) transportiert,
Entnehmen des laminierten Materialbogenhefts (500) zwischen den beiden Laminationsblechen (104) durch eine Entnahmevorrichtung (130).

## Claims

1. A laminating device (100, 100', 100") for laminating a material sheet booklet (500) for a document type selected from a plurality of different identification, value, or security document types, wherein the material sheet booklet (500) comprises a document-type-specific selection of material sheets (400) in a document-type-specific sequence,
wherein the laminating device (100, 100', 100") comprises
a lamination plate supply station (102) which keeps available lamination plates (104) of different lamination plate pairs for the different document types,
a lamination plate changer (108), which is configured to remove a first and a second lamination plate (104) of the lamination plate pairs in accordance with the document type of the material sheet booklet (500) from the lamination plate supply station (102) and to arrange them in a receptacle of a lamination plate transport device (116, 116', 116"),
lamination stations (124), which are arranged side by side in a row, wherein the lamination plate transport device (116, 116', 116") is configured to transport the two lamination plates (104) in the receptacle (118) to the individual lamination stations (124) one after the other, said lamination stations each being configured to apply pressure and heat in a predefined manner to the two lamination plates (104) in order to laminate the material sheet booklet (500),
a dispensing device (128), which is configured to introduce the material sheet booklet (500) to be laminated between the first and second lamination plates (104) in the receptacle (118), and a removing device (130), which is configured to remove the laminated material sheet booklet (500) from between the two lamination plates (104).

2. The laminating device (100, 100', 100") according to claim 1, wherein, in the event that a further material sheet booklet (500) of another document type is to be laminated subsequently, the lamination plate changer (108) is configured to remove the first and second lamination plate (104), to introduce the two lamination plates (104) into the lamination plate supply station (102), to remove one of the lamination plate pairs for the other document type from the lamination plate supply station (102), and to arrange said lamination plate pair in the receptacle (118) of the lamination plate transport device (116, 116', 116"), and/or
wherein the lamination plate transport device (116, 116', 116") comprises a plurality of the receptacles (118), which are arranged side by side in a row and are each configured to receive one of the lamination plate pairs.

3. The laminating device (100, 100', 100") according to claim 2, wherein the lamination plate changer (108) has a lamination plate dispensing device (109) for the introduction of the first and second lamination plate (104) into the receptacle (118) and has a lamination plate removing device (148) for the removal of the first and second lamination plate (104) from the receptacle (118).

4. The laminating device (100, 100', 100") according to claim 3, wherein the lamination plate dispensing device (109) and/or lamination plate removing device (148) is in each case an arm of a robot (110, 150), which has a free end (112, 152) with a lamination plate gripper (114, 156) for gripping the lamination plates (104).

5. The laminating device (100, 100', 100") according to any one of the preceding claims, wherein the lamination plate transport device is a rotary plate (116), on which the receptacles (118) are arranged side by side along the periphery (162) of the rotary plate (116), wherein the lamination stations (124) are arranged along the periphery (162) of the rotary table (116), and wherein the rotary table (116) is configured to rotate about a central axis (120) such that the receptacles (118) are transported to the lamination stations (124).

6. The laminating device (100, 100', 100") according to any one of claims 1 to 4, wherein the lamination plate transport device (116', 116') is a first linear conveying device, and wherein the conveying device is configured to move the receptacles (118) with the lamination plate pairs along a straight line from a first end (176) to a second end (178) of the conveying device, so that the receptacles are transported with lamination plate pairs to the lamination stations (124) which are arranged between the first and the second end (176, 178) along the straight line.

7. The laminating device (100, 100', 100") according to claim 6, wherein the first linear conveying device comprises two conveying strands (186, 188) extending at least partially in parallel along the straight lines, which conveying strands comprise mutually opposed holding elements, which form the receptacles and in each case are configured to hold a lamination plate pair between the conveying strands (186, 188), and/or wherein the laminating device (100, 100', 100") comprises a second linear conveying device (174), which is configured to transport the lamination plate pairs back from the second end (178) to the first end (176) of the first conveying device, and/or
wherein the dispensing device (128) and the lamination plate dispensing device (109) are arranged at the first end (176), and the removing device (130) and the lamination plate removing device (148) are arranged at the second end (178) of the first conveying device.

8. The laminating device (100, 100', 100") according to any one of the preceding claims, having a control device (144), which comprises a monitoring device (142, 143), wherein the monitoring device (142, 143) is configured to detect damage to a lamination plate (104), wherein the control device (144) is configured to receive a selection of a document type to be created, to choose a lamination plate pair for producing the selected document type from the lamination plate supply station (102), to check the lamination plates (104) of the selected lamination plate pair for damage by means of the monitoring device (142, 143), to separate the damaged lamination plate (104) in the event that damage is detected, and to choose from the lamination plate supply station an alternative lamination plate (104) which is configured for producing the selected document type.

9. The laminating device (100, 100', 100") according to claim 8, wherein the control device (144) is configured to check the lamination plates (104) removed from the lamination plate transport device (116, 116', 116") for damage by means of the monitoring device (142, 143) and, in the event that damage is detected, to separate out the damaged plate(s).

10. The laminating device (100, 100', 100") according to any one of the preceding claims, wherein a lamination plate carrier (602) is arranged on the lamination plates (104) and is configured to grip and/or support the lamination plate (104).

11. The laminating device (100, 100', 100") according to claim 10, wherein the lamination plate carrier is fixed to the lamination plate (104) by means of fixing elements (604) such that the lamination plate carrier may be detached without destruction.

12. The laminating device (100, 100', 100") according to any one of the preceding claims, wherein the lamination plate supply station (102) comprises a supply magazine for storing the lamination plates (104) in magazine compartments (196).

13. The laminating device (100, 100', 100") according to any one of the preceding claims, wherein the lamination plates (104) are each provided with an identifier (198) which is configured to identify the document type for the production of which the lamination plate (104) is configured, and/or a lamination plate pair to which the lamination plate (104) is assigned, and/or the individual lamination plate (104) itself.

14. The laminating device (100, 100', 100") according to claim 13, wherein the lamination plate changer (108) comprises a reading device (200) for reading the identifiers (198) and is configured to identify the document type and/or the lamination plate pair and/or the individual lamination plate (104) by means of the reading device (200).

15. A method for laminating a material sheet booklet (500) for a document type selected from a plurality of different identification, value, or security document types with use of a laminating device (100, 100', 100") according to any one of the preceding claims, wherein the material sheet booklet (500) comprises a document-type-specific selection of material sheets (400) in a document-type-specific sequence,
wherein the method comprises
providing lamination plates (104) of different lamination plate pairs for the different document types, which lamination plates are kept available in a lamination plate supply station (102),
removing a first and a second lamination plate (104) of the lamination plate pairs in accordance with the document type of the material sheet booklet (500) from the lamination plate supply station (102) by a lamination plate changer (108),
arranging the two lamination plates (104) in a receptacle of a lamination plate transport device (116, 116', 116") by the lamination plate changer (108), wherein the material sheet booklet (500) to be laminated is arranged between the two lamination plates (104) by a dispensing device (128),
applying pressure and heat in a predefined manner to the two lamination plates (104) in the receptacle, wherein the lamination plate transport device (116, 116', 116") transports the two lamination plates (104) in succession to the lamination stations (124) arranged side by side in a row,
removing the laminated material sheet booklet (500) between the two lamination plates (104) by a removal device (130).

## Revendications

1. Dispositif de laminage (100, 100', 100") permettant de laminer un livret de feuilles de matière (500) destiné à un type de document choisi dans une multiplicité de types de documents d'identité, de valeur ou de sécurité différents, où le livret de feuilles de matière (500) comprend une sélection de feuilles de matière (400) spécifique pour le type de document dans un ordre spécifique pour le type de document,
où le dispositif de laminage (100, 100', 100") comprend,
un poste de réserve de tôles de laminage (102), lequel garde en réserve des tôles de laminage (104) de différentes paires de tôles de laminage pour les types de documents différents,
un échangeur de tôles de laminage (108), lequel est conçu pour prélever une première et une deuxième tôle de laminage (104) des paires de tôles de laminage selon le type de document du livret de feuilles de matière (500) à partir du poste de réserve de tôles de laminage (102) et pour les ordonner dans un réceptacle d'un dispositif de transport de tôles de laminage (116, 116', 116"),
des postes de laminage (124), lesquels sont disposés les uns à côté des autres dans une rangée, où le dispositif de transport de tôles de laminage (116, 116', 116") est conçu pour transporter les deux tôles de laminage (104) dans le réceptacle (118) l'une après l'autre vers les postes de laminage (124) individuels, lesquels sont respectivement conçus pour soumettre les deux tôles de laminage (104) à une pression et à de la chaleur pour le laminage du livret de feuilles de matière (500) d'une manière prédéfinie,
un dispositif de distribution (128), lequel est conçu pour poser le livret de feuilles de matière (500) à laminer entre la première et la deuxième tôle de laminage (104) dans le réceptacle (118), et un dispositif de prélèvement (130), lequel est conçu pour prélever le livret de feuilles de matière (500) laminé entre les deux tôles de laminage (104).

2. Dispositif de laminage (100, 100', 100") selon la revendication 1, dans lequel l'échangeur de tôles de laminage (108) est conçu pour, dans le cas où par la suite un nouveau livret de feuilles de matière (500) d'un autre type de document doit être laminé, prélever la première et la deuxième tôle de laminage (104), introduire les deux tôles de laminage (104) dans le poste d'approvisionnement de tôles de laminage (102), prélever une des paires de tôles de laminage pour le nouveau type de document à partir du poste d'approvisionnement de tôles de laminage (102) et le ranger dans le réceptacle (118) du dispositif de transport de tôles de laminage (116, 116', 116"), et/ou
dans lequel le dispositif de transport de tôles de laminage (116, 116', 116") comprend une multiplicité de réceptacles (118), lesquels sont disposés les uns à côté des autres dans une rangée et qui sont respectivement conçus pour recevoir une des paires de tôles de laminage.

3. Dispositif de laminage (100, 100', 100") selon la revendication 2, dans lequel l'échangeur de tôles de laminage (108) présente un dispositif de distribution de tôles de laminage (109) pour l'insertion de la première et de la deuxième tôle de laminage (104) dans le réceptacle (118) et un dispositif de prélèvement de tôles de laminage (148) pour le prélèvement de la première et de la deuxième tôle de laminage (104) à partir du réceptacle (118).

4. Dispositif de laminage (100, 100', 100") selon la revendication 3, dans lequel, dans le cas du dispositif de distribution de tôles de laminage (109) et/ou du dispositif de prélèvement de tôles de laminage (148), il s'agit respectivement d'un bras d'un robot (110, 150), lequel présente une extrémité libre (112, 152) avec une pince pour tôle de laminage (114, 156) pour saisir les tôles de laminage (104).

5. Dispositif de laminage (100, 100', 100") selon l'une des revendications précédentes, dans lequel, dans le cas du dispositif de transport de tôles de laminage, il s'agit d'un plateau tournant (116) sur lequel les réceptacles (118) sont disposés les uns à côté des autres le long du périmètre (162) du plateau tournant (116), où les postes de laminage (124) sont disposés le long du périmètre (162) du plateau tournant (116) et où le plateau tournant (116) est conçu pour être en rotation autour d'un axe central (120) de manière à ce que les réceptacles (118) se trouvent transportés vers les postes de laminage (124).

6. Dispositif de laminage (100, 100', 100") selon l'une des revendications 1 à 4, dans lequel, dans le cas du dispositif de transport de tôles de laminage (116', 116'), il s'agit d'un premier dispositif de transport linéaire, et où le dispositif de transport est conçu pour déplacer les réceptacles (118) avec les paires de tôles de laminage le long d'une ligne droite à partir d'une première extrémité (176) vers une deuxième extrémité (178) du dispositif de transport de sorte que les réceptacles sont transportés avec les paires de tôles de laminage vers les postes de laminage (124), lesquels sont disposés entre la première et la deuxième extrémité (176,178) le long de la ligne droite.

7. Dispositif de laminage (100, 100', 100") selon la revendication 6, dans lequel le premier dispositif de transport linéaire comprend deux lignes de transport (186, 188) s'étendant au moins partiellement parallèles le long de la ligne droite, lesquelles comprennent respectivement des éléments de maintien situés les uns en face des autres qui forment les réceptacles et sont conçus pour tenir respectivement une paire de tôles de laminage entre les lignes de transport (186,188), et/ou
où le dispositif de laminage (100, 100', 100") comprend un deuxième dispositif de transport (174) linéaire, lequel est conçu pour transporter de nouveau les paires de tôles de laminage de la deuxième extrémité (178) vers la première extrémité (176) du premier dispositif de transport, et/ou
où le dispositif de distribution (128) et le dispositif de distribution de tôles de laminage (109) sont disposés à la première extrémité (176) et le dispositif de prélèvement (130) et le dispositif de prélèvement de tôles de laminage (148) sont disposés à la deuxième extrémité (178) du premier dispositif de transport.

8. Dispositif de laminage (100, 100', 100") selon l'une des revendications précédentes, doté d'un dispositif de commande (144), lequel comprend un dispositif de contrôle (142, 143), où le dispositif de contrôle (142, 143) est conçu pour détecter un endommagement d'une tôle de laminage (104), où le dispositif de commande (144) est conçu pour recevoir une sélection d'un type de document à élaborer, choisir une paire de tôles de laminage pour la fabrication du type de document sélectionné à partir du poste de réserve de tôles de laminage (102), vérifier s'il n'y a pas de défaut sur les tôles de laminage (104) de la paire de tôles de laminage choisie avec le dispositif de contrôle (142, 143), dans le cas d'une détection d'un endommagement, prélever la tôle de laminage (104) endommagée du lot et choisir une tôle de laminage (104) alternative à partir du poste de réserve de tôles de laminage, laquelle est conçue pour la fabrication du type de document sélectionné.

9. Dispositif de laminage (100, 100', 100") selon la revendication 8, dans lequel le dispositif de commande (144) est conçu pour vérifier s'il n'y a pas de défaut sur les tôles de laminage (104) prélevées à partir du dispositif de transport de tôles de laminage (116, 116', 116") avec le dispositif de contrôle (142, 143) et dans le cas d'une détection d'un endommagement les prélever du lot.

10. Dispositif de laminage (100, 100', 100") selon l'une des revendications précédentes, dans lequel un support de tôle de laminage (602) est respectivement disposé sur les tôles de laminage (104), lequel est conçu pour la saisie et/ou le stockage de la tôle de laminage (104).

11. Dispositif de laminage (100, 100', 100") selon la revendication 10, dans lequel le support de tôle de laminage est fixé au moyen d'éléments de fixation (604) respectivement de manière amovible sans occasionner de dégâts sur la tôle de laminage (104).

12. Dispositif de laminage (100, 100', 100") selon l'une des revendications précédentes, dans lequel le poste de réserve de tôles de laminage (102) comprend un magasin de réserve pour le stockage des tôles de laminage (104) dans des compartiments du magasin (196).

13. Dispositif de laminage (100, 100', 100") selon l'une des revendications précédentes, dans lequel les tôles de laminage (104) sont respectivement munies d'un identificateur (198), lequel est conçu pour identifier le type de document pour la fabrication duquel la tôle de laminage (104) est conçue, et/ou une paire de tôles de laminage à laquelle est associée la tôle de laminage (104), et/ou la tôle de laminage (104) individuelle proprement dite.

14. Dispositif de laminage (100, 100', 100") selon la revendication 13, dans lequel l'échangeur de tôles de laminage (108) comprend un dispositif de lecture (200) permettant la lecture des identificateurs (198) et est conçu pour identifier avec le dispositif de lecture (200) le type de document, et/ou la paire de tôles de laminage, et/ou la tôle de laminage (104) individuelle.

15. Procédé de laminage d'un livret de feuilles de matière (500) destiné à un type de document choisi dans une multiplicité de types de documents d'identité, de valeur ou de sécurité différents, moyennant l'emploi d'un dispositif de laminage (100, 100', 100") selon l'une des revendications précédentes, où le livret de feuilles de matière (500) comprend une sélection de feuilles de matière (400) spécifique pour le type de document dans un ordre spécifique pour le type de document,
où le procédé comprend,
la fourniture de tôles de laminage (104) de paires de tôles de laminage différentes pour les différents types de documents, lesquelles sont gardées en réserve dans un poste de réserve de tôles de laminage (102),
le prélèvement d'une première et d'une deuxième tôle de laminage (104) des paires de tôles de laminage en fonction du type de document du livret de feuilles de matière (500) à partir du poste de réserve de tôles de laminage (102) par un échangeur de tôles de laminage (108),
l'agencement des deux tôles de laminage (104) dans un réceptacle d'un dispositif de transport de tôles de laminage (116, 116', 116") par l'échangeur de tôles de laminage (108), où le livret de feuilles de matière (500) à laminer est disposé entre les deux tôles de laminage (104) par un dispositif de distribution (128),
la soumission des deux tôles de laminage (104) dans le réceptacle à une pression et à de la chaleur successivement de manière prédéfinie par des postes de laminage (124), où le dispositif de transport des tôles de laminage (116, 116', 116") transporte les deux tôles de laminage (104) successivement vers les postes de laminage (124) disposés les uns à côté des autres dans une rangée,
le prélèvement du livret de feuilles de matière (500) laminé entre les deux tôles de laminage (104) par un dispositif de prélèvement (130).
